# EUROPÄISCHE PATENTANMELDUNG

(11) **EP 4 840 617 A1**
(43) Veröffentlichungstag der Anmeldung: **18.11.2026**
(21) Anmeldenummer: 25175766.2
(22) Anmeldetag: 12.05.2025
(51) Int. Cl.: B29C 64/40, B33Y 70/00

(54) **THERMOPLASTISCHES STÜTZMATERIAL FÜR 3D-DRUCK**

(71) Anmelder: DIPROmat GmbH, 91587 Adelshofen (DE)
(72) Erfinder: STENGLIN, Uwe, 91587 Adelshofen (DE)
(74) Vertreter: Louis Pöhlau Lohrentz

(57) **Zusammenfassung**

Die vorliegende Erfindung betrifft ein Verfahren zur additiven Herstellung eines dreidimensionalen Objektes, eine polymere Zusammensetzung, und die Verwendung der polymeren Zusammensetzung in dem Verfahren zur additiven Herstellung eines dreidimensionalen Objektes.

## Beschreibung

Die vorliegende Erfindung betrifft ein Verfahren zur additiven Herstellung eines dreidimensionalen Objektes, eine polymere Zusammensetzung, und die Verwendung der polymeren Zusammensetzung in dem Verfahren zur additiven Herstellung eines dreidimensionalen Objektes.

Kommerziell erhältliche additive Fertigungssysteme, z. B. dreidimensionale (3D) Drucker, wie die Projet^{™} 3D-Drucker der 3D Systems Corporation (Rock Hill, SC, USA), verwenden wenigstens ein Modellmaterial, das als fließfähige oder flüssige Zusammensetzung durch eine Öffnung oder Düse, die beispielsweise Bestandteil eines Druckkopfes ist, gespritzt oder als erweichtes Material extrudiert wird, um verschiedene Kunststoffformteile herzustellen.

Bei der additiven Herstellung wird ein Kunststoffformteil dabei schichtweise aus wenigstens einem Modellmaterial aufgebaut, wobei zunächst eine digitale Darstellung des zu druckenden Bauteils verwendet wird, die in mehrere horizontale Schichten aufgeteilt wird. Für jede aufgeteilte Schicht wird dann vorzugsweise ein Werkzeugpfad generiert, der Anweisungen für das jeweilige additive Fertigungssystem zum Drucken der jeweiligen Schicht enthält.

Bei 3D-Drucksystemen, die aus dem Stand der Technik bekannt sind, werden dabei vorzugsweise thermoplastische Kunststoffe verwendet, die durch eine Öffnung oder Düse, die beispielsweise Bestandteil eines Druckkopfes ist, gespritzt oder als erweichtes Material extrudiert werden, um 3D-Teile herzustellen. Dabei wird beispielsweise ein bei Raumtemperatur festes polymeres Modellmaterial durch Zufuhr von Wärmeenergie zumindest fließfähig gemacht und nachfolgend durch eine Öffnung oder Düse, die beispielsweise Bestandteil eines Druckkopfes ist, in Form einer Schicht aufgetragen. Nach oder während des schichtweisen Auftragens des zumindest fließfähigen polymeren Modellmaterials erfolgt vorzugsweise ein Aushärten des Modellmaterials unter Erhalt einer zumindest in Teilbereichen ausgehärteten Schicht. Anschließend kann auf die zumindest in Teilbereichen ausgehärteten Schicht wenigstens eine weitere Schicht des polymeren Modellmaterials in analoger Weise aufgebracht werden.

Bekannte polymere Modellmateriale sind beispielsweise Polyacrylnitril-Butadien-Styrol (ABS) oder Polymilchsäure (PLA).

Darüber hinaus erfordert die Herstellung eines dreidimensionalen (3D-)Objektes mit einem additiven Fertigungssystem, z. B. einem 3D-Drucksystem, häufig die Verwendung eines Stützmaterials in Verbindung mit dem Modellmaterial, wobei das Stützmaterial zur Herstellung wenigstens einer Stützstruktur verwendet wird. Die wenigstens eine Stützstruktur stützt beispielsweise überhängende Segmente oder Teile, die in der endgültigen Geometrie des herzustellenden 3D-Objektes nicht direkt durch dreidimensionale Strukturen oder Schichten aus dem verwendeten Modellmaterial gestützt werden. Das Stützmaterial und eine daraus hergestellte Stützstruktur kann für verschiedene andere Zwecke verwendet werden, z. B. um die Verformung durch die Eigenlast des Modellmaterials zu minimieren, um Hohlprofile herzustellen und/oder um mehrere bewegliche Komponenten im gleichen Bauteil zu ermöglichen. Bei der Herstellung der wenigstens einen Stützstruktur wird Stützmaterial vorzugsweise ebenfalls durch eine Öffnung oder Düse, die beispielsweise Bestandteil eines Druckkopfes ist, gespritzt oder als erweichtes Material extrudiert. Das verwendete Stützmaterial besteht in der Regel ebenfalls aus Kunststoffen, die bei Raumtemperatur fest und bei höheren Spritztemperaturen zumindest fließfähig sind. Im Gegensatz zum Modellmaterial wird das Stützmaterial und eine daraus hergestellte Stützstruktur jedoch nach dem Druck entfernt, um das fertige dreidimensionale Bauteil zu erhalten. Dabei muss das Stützmaterial vom gedruckten dreidimensionalen Bauteil entfernt werden können, ohne das Bauteil aus dem verwendeten Modellmaterial zu beschädigen.

Das Stützmaterial und eine daraus hergestellte Stützstruktur kann dabei durch verschiedene Verfahren entfernt werden, z. B. durch Erhitzen des Stützmaterial auf eine Temperatur oberhalb seines Schmelzpunktes in Verbindung mit der Verwendung eines geeigneten organischen Lösungsmittels, um das Stützmaterial ausreichend vom Modellmaterial zu entfernen. Geeignete aus dem Stand der Technik bekannte organische Lösungsmittel sind beispielsweise d-Limonen-haltige Lösungsmittel, Alkohole wie Isopropylalkohol, Ether wie Tripropylenglykolmonomethylether oder Ketone wie Aceton.

In einigen Fällen hinterlässt das organische Lösungsmittel unerwünschte ölige Rückstände auf dem fertigen dreidimensionalen Objekt. Weiterhin sind nicht alle Modellmaterialien mit den verwendeten organischen Lösungsmitteln kompatibel. Darüber hinaus kann die Verwendung hoher Temperaturen zusätzlich zu einem geeigneten organischen Träger in einigen Fällen die mechanische Integrität des fertigen dreidimensionalen Objektes beeinträchtigen, was zu Verformung oder Versagen des Bauteils führen kann.

Eine weitere Möglichkeit zum Entfernen des Stützmaterials und einer daraus hergestellten Stützstruktur besteht in der Verwendung wenigstens eines wasserlöslichen Stützmaterials, das nach dem Drucken in einer ausreichenden Menge Wasser, das ggf. ein oder mehrere pH-Stellmittel, beispielsweise Basen, enthalten kann, aufgelöst und so vom gedruckten dreidimensionalen Bauteil aus Modellmaterial entfernt werden kann.

Geeignete aus dem Stand der Technik bekannte wasserlösliche Stützmaterialien sind beispielsweise wasserlösliche Salze von Polycarbonaten (Kurzzeichen PC), oder Polyacrylsäure (PAA), Polyvinylalkohole (Kurzzeichen PVA oder PVOH), Polyvinylpyrrolidone (PVP), oder Butendiol-Vinylalkohol-Copolymere (BVOH).

Beispielsweise offenbart die US 2010096072 A1 ein Stützmaterial umfassend ein Copolymer mit einer ersten Monomereinheit, die eine Carboxylgruppe umfasst, und einer zweiten Monomereinheit, die eine Phenylgruppe umfasst.

Beispielsweise ist die WO 2017/112687 A1 auf ein Stützmaterial zur Verwendung in einem additiven Fertigungssystem gerichtet, wobei das Stützmaterial ein Copolymer aus Vinylpyrrolidon (VP)-Monomeren und elastomeren Monomeren enthält.

Nachteilig bei der Verwendung von wasserlöslichen Stützmaterialien ist jedoch, dass diese Materialien sehr hygroskopisch sind und aufwendig getrocknet, verpackt und gelagert werden müssen. Vor der Verwendung müssen wasserlösliche Stützmaterialien gegebenenfalls getrocknet werden, um Druckfehler zu vermeiden.

Die Aufnahme von Feuchtigkeit aus der Umgebungsluft kann die Wahrscheinlichkeit von Düsenverstopfungen beim 3D-Druck erhöhen. Außerdem können Löcher in der gedruckten Stützstruktur entstehen, wenn ein nicht ausreichend getrocknetes Stützmaterial beispielsweise unter Blasenbildung extrudiert wurde.

Darüber hinaus erfordert der Druckvorgang von Strukturen aus wasserlöslichen Stützmaterialien auch während des Druckprozesses besondere Umgebungsbedingungen, wie zum Beispiel eine kontrollierte Umgebung, die vorzugsweise eine geringe oder keine Luftfeuchtigkeit aufweist, und häufig einen Drucker mit zwei Abgabevorrichtungen, beispielsweise in Form von Druckköpfen, um das Material korrekt zu verarbeiten, um Beschädigungen des Bauteils zu vermeiden.

Beim Auflösen in Wasser kann das Stützmaterial aufquellen. Dünnwandige gedruckte Bauteilstrukturen können durch das Aufquellen beschädigt werden. Insbesondere beim 3D-Druck von innenliegenden Hohlräumen mit Stützstruktur muss daher der Füllgrad der Stützstruktur angepasst werden.

Da die wasserlöslichen Stützmaterialien nach Auflösung in Wasser auch ins Abwasser gelangen können, muss zudem die Umweltverträglichkeit in Kläranlagen geprüft werden. Beispielsweise sind Polycarboxylate biologisch schlecht abbaubar. In Kläranlagen verbleiben diese Polymere überwiegend im Klärschlamm, wo diese sich anreichern können.

Zudem lassen sich entsprechende wasserlösliche Stützmaterialien nicht ohne weiteres zu Granulaten verarbeiten, da die Herstellung von Granulaten ohne Wasserkühlung schwierig ist.

Eine aus dem Stand der Technik bekannte Alternative zur Verwendung wasserlöslicher Stützmaterialien sind sogenannte "Brake-away"-Stützmaterialien.

Beispielsweise offenbart die WO 2016/073409 A1 ein "Brake-away"-Stützmaterial zur Verwendung in einem additiven Fertigungssystem.

"Brake-away"-Stützmaterialien werden nach dem Druck durch Krafteinwirkung von dem gedruckten Bauteil entfernt. Meist werden dabei gedruckte Stützstrukturen mit Hand oder Zangen von dem gedruckten Bauteil ausgebrochen.

"Break-away"-Stützmaterialien bieten den Vorteil, dass gedruckte Stützstrukturen leicht und ohne Verwendung von Lösungsmitteln entfernt werden können. Die manuelle Entfernung des Stützmaterials kann jedoch zeitaufwändig und mühsam sein, insbesondere bei großen oder komplexen Bauteilen. Außerdem kann das Entfernen des Stützmaterials raue Oberflächen oder Abdrücke auf dem gedruckten Bauteil hinterlassen, die eine Nachbearbeitung erforderlich machen.

Für sehr komplexe oder filigrane Strukturen sind "Break-away"-Stützmaterialien weniger geeignet, da sie möglicherweise nicht ausreichend Unterstützung bieten und schwer zu entfernen sind. Insbesondere bei schwer zugänglichen Kanälen oder Bohrungen im herzustellenden Bauteil besteht die Gefahr, dass Reste der Stützstruktur im Bauteil stecken bleiben.

Weiterhin sind nicht alle Konstruktions- oder Modellmaterialien mit "Break-away"-Stützmaterialien kompatibel. Dies kann die Auswahl an zu verwendenden Konstruktions- oder Modellmaterialien einschränken.

Es besteht daher der Bedarf nach einem Stützmaterial, das zur einfachen Herstellung wenigstens einer Stützstruktur mittels additiver Fertigung, vorzugsweise 3D-Druck, geeignet ist. Dabei soll sich die wenigstens eine Stützstruktur einfach von der hergestellten dreidimensionalen Modellstruktur, vorzugsweise zumindest von einem Teilbereich der Oberfläche der Modellstruktur, der mit der wenigstens einen Stützstruktur in Kontakt steht, entfernen lassen, ohne dass Rückstände des Stützmaterials auf dem entsprechenden Teilbereich der Oberfläche der Modellstruktur verbleiben und/oder die Oberfläche der hergestellten Modellstruktur beim Entfernen der Stützstruktur beschädigt wird.

Die Aufgabe der vorliegenden Erfindung wird gelöst durch die Bereitstellung eines Verfahrens nach Anspruch 1 zur additiven Herstellung eines dreidimensionalen, weiter bevorzugt formbeständigen Objektes, wobei das Verfahren folgende Schritte umfasst oder daraus besteht:
a1) sequenzielles Auftragen und Verfestigen von wenigstens einer ersten Schicht aus wenigstens einem Modellmaterial, wobei die wenigstens eine erste Schicht in einem konfigurierten ersten Muster angeordnet wird unter Erhalt einer Modellstruktur, die dem dreidimensionalen Objekt entspricht, und wobei das wenigstens eine Modellmaterial ein thermoplastisches Polymer ist,
a2) sequenzielles Auftragen und Verfestigen von wenigstens einer zweiten Schicht aus wenigstens einem Stützmaterial, wobei die wenigstens eine zweite Schicht in einem konfigurierten zweiten Muster angeordnet wird unter Erhalt wenigstens einer Stützstruktur, wobei die Modellstruktur und die wenigstens eine Stützstruktur zumindest in einem Teilbereich der Oberfläche lösbar miteinander in Kontakt stehen, und wobei das wenigstens eine Stützmaterial wenigstens eine polymere Zusammensetzung umfasst oder daraus besteht, die:
   (i) wenigstens ein elastomeres, erstes Polymer mit einem Schmelzpunkt von unter 100°C, das ausgewählt ist aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon, und
   (ii) wenigstens ein elastomeres, unpolares, zweites Polymer mit einem Schmelzpunkt aus einem Bereich von 100°C bis 180°C, das aus der Gruppe, die aus Polyethylen, Polypropylen, Copolymere von Polyethylen und Polypropylen sowie Mischungen davon besteht, ausgewählt ist, umfasst,
b) Beaufschlagen der wenigstens einen Stützstruktur mit thermischer Energie bei einer Temperatur aus einem Bereich von 55°C bis 135°C unter Erhalt einer zumindest in Teilbereichen erweichten Stützstruktur, und
c) Abziehen der wenigstens einen zumindest in Teilbereichen erweichten Stützstruktur von der Modellstruktur unter Erhalt des dreidimensionalen Objektes.

Vorzugsweise umfasst das in Schritt a2) verwendete wenigstens eine Stützmaterial eine polymere Zusammensetzung nach einem der Ansprüche 7 bis 13 oder besteht daraus.

Bevorzugte Ausführungsformen des erfindungsgemäßen Verfahrens sind in den abhängigen Ansprüchen 2 bis 6, und 14 angegeben.

Die Aufgabe der vorliegenden Erfindung wird weiterhin gelöst durch die Bereitstellung einer polymere Zusammensetzung nach Anspruch 7, umfassend:
(i) wenigstens ein elastomeres, erstes Polymer mit einem Schmelzpunkt von unter 100°C, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und
(ii) wenigstens ein elastomeres, unpolares, zweites Polymer mit einem Schmelzpunkt aus einem Bereich von 100°C bis 180°C, das aus der Gruppe, die aus Polyethylen, Polypropylen, Copolymere von Polyethylen und Polypropylen sowie Mischungen davon besteht, ausgewählt ist.

Bevorzugte Ausführungsformen der erfindungsgemäßen polymere Zusammensetzung sind in den abhängigen Ansprüchen 8 bis 13 angegeben.

Die Aufgabe der vorliegenden Erfindung wird ebenfalls gelöst durch die Bereitstellung einer Verwendung nach Anspruch 15 einer polymere Zusammensetzung nach einem der Ansprüche 7 bis 13 in einem Verfahren, vorzugsweise nach einem der Ansprüche 1 bis 7, und 14, zur additiven Herstellung eines dreidimensionalen Objektes, wobei die polymere Zusammensetzung als Stützmaterial verwendet wird.

Die Erfinder haben festgestellt, dass durch Verwendung einer erfindungsgemäßen polymeren Zusammensetzung oder einer erfindungsgemäß als Stützmaterial zu verwendenden polymeren Zusammensetzung in einem Verfahren zur additiven Herstellung einer dreidimensionalen, weiter bevorzugt formbeständigen, Modellstruktur, es einerseits möglich ist, auf einfache Weise wenigstens eine Stützstruktur bereitzustellen, die mit der Modellstruktur zumindest in einem Teilbereich der Oberfläche lösbar miteinander in Kontakt steht und dabei vorzugsweise eine ausreichende Steifigkeit und Festigkeit aufweist, um vorzugsweise freitagende Strukturen und/oder Hinterschneidungen der dreidimensionalen Modellstruktur, beispielsweise während der Herstellung, zu stützen und/oder zu stabilisieren, und andererseits die wenigstens eine Stützstruktur auf einfache Weise von der Oberfläche der hergestellten Modellstruktur entfernt werden kann, ohne dabei die hergestellte dreidimensionalen Modellstruktur zu beschädigen.

Ein Entfernen der wenigstens einen Stützstruktur erfolgt dabei durch ein einfaches Beaufschlagen der wenigstens einen Stützstruktur mit thermischer Energie bei einer Temperatur aus einem Bereich von 60°C bis 135°C unter Erhalt einer zumindest in Teilbereichen erweichten Stützstruktur und Abziehen der wenigstens einen zumindest in Teilbereichen erweichten Stützstruktur von der Modellstruktur unter Erhalt des dreidimensionalen Objektes.

Im erfindungsgemäßen Verfahren wird vorzugsweise beim Entfernen der wenigstens einen Stützstruktur von der Modellstruktur, vorzugsweise nach Schritt a1) und Schritt a2) und vor, während und/oder nach den Schritten b) und/oder c), weiter bevorzugt nach Schritt a1) und Schritt a2) und vor, während und/oder nach Schritt b) und/oder nach Schritt c), kein Lösungsmittel verwendet, vorzugsweise kein organisches Lösungsmittel und/oder kein anorganisches Lösungsmittel, insbesondere kein Wasser. Das mit dem erfindungsgemäßen Verfahren unter Verwendung der erfindungsgemäßen polymere Zusammensetzung hergestellte dreidimensionale Objekt muss daher nach Entfernen der Stützstruktur nicht aufwendig getrocknet werden. Damit spart das erfindungsgemäße Verfahren Energie ein.

Weiterhin kann eine abgezogene Stützstruktur zerkleinert und/oder umgeformt und/oder plastifiziert und nachfolgend gegebenenfalls mit allen gängigen Polyolefinen gemischt werden. Das in einer abgezogenen Stützstruktur enthaltene Stützmaterial, das eine erfindungsgemäße polymere Zusammensetzung oder eine erfindungsgemäß zu verwendende polymere Zusammensetzung umfasst oder daraus besteht, kann somit wiederverwendet werden. Damit spart das erfindungsgemäße Verfahren zusätzlich Ressourcen ein.

Darüber hinaus weist eine erfindungsgemäße polymere Zusammensetzung oder eine erfindungsgemäß zu verwendende polymere Zusammensetzung eine ausreichende Haftung zu gängigen polymeren Modellmaterialien auf. Dadurch kommt es vorzugsweise zu keinen Problemen, beispielsweise Schichtverschiebung, beim Auftragen einer Schicht aus wenigstens einem Modellmaterial auf eine Schicht, die eine erfindungsgemäße polymere Zusammensetzung oder eine erfindungsgemäß zu verwendende polymere Zusammensetzung aufweist oder daraus besteht.

Unter dem Begriff "Modellstruktur" wird vorzugsweise eine dreidimensionale, weiter bevorzugt formstabile, Struktur verstanden, die der dreidimensionalen Form, vorzugsweise zumindest der äußeren Oberfläche, des herzustellenden dreidimensionalen Objektes entspricht. Vorzugsweise weist die Modellstruktur wenigstens eine (Zahl = 1) erste Schicht, vorzugsweise 1, 2, 3, 4, 5 oder mehr Schichten, aus wenigstens einem Modellmaterial auf, die in einem konfigurierten ersten Muster angeordnet ist / sind. Weiter bevorzugt weist die Modellstruktur wenigstens einen ersten Stapel von Schichten auf, wobei der erste Schichtstapel vorzugsweise 2, 3, 4, 5 oder mehr Schichten aus wenigstens einem Modellmaterial aufweist, die in einem konfigurierten ersten Muster angeordnet sind. Weiter bevorzugt sind die einzelnen Schichten des wenigstens einen ersten Schichtstapels unmittelbar aufeinander in einem konfigurierten ersten Muster angeordnet.

Der Begriff "Modellmaterial" bezeichnet vorzugsweise eine im erfindungsgemäßen Verfahren zur Herstellung der Modellstruktur verwendete polymere Zusammensetzung, die wenigstens ein thermoplastisches Polymer umfasst oder daraus besteht, das vorzugsweise einen Schmelzpunkt aufweist, der oberhalb des Schmelzpunktes der zur Herstellung der wenigstens eine Stützstruktur verwendeten Stützmaterials liegt.

Der in der vorliegenden Anmeldung verwendete "Schmelzpunkt" wird vorzugsweise unter Verwendung der dynamischen Differenzkalorimetrie bestimmt. Ein geeignetes Verfahren zur Bestimmung eines Schmelzpunktes oder eines Schmelzpunktbereiches ist vorzugsweise das in ASTM D3418-15 ("Standard Test Method for Transition Temperatures and Enthalpies of Fusion and Crystallization of Polymers by Differential Scanning Calorimetry", DOI: 10.1520/D3418-15) beschriebene Verfahren oder das in der DIN EN ISO 11357-3:2018-07 ("Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2018); Deutsche Fassung EN ISO 11357-3:2018, Ausgabedatum: 2018-07) beschriebene Verfahren.

Unter dem Begriff "Stützstruktur" wird vorzugsweise eine dreidimensionale, weiter bevorzugt formstabile, Struktur verstanden, die mit der Modellstruktur zumindest in einem Teilbereich der Oberfläche lösbar in Kontakt steht und bestimmte Teilbereiche der Oberfläche der Modellstruktur, beispielsweise während des Aufbaus der Modellstruktur, vorübergehend stützt und/oder eine angemessene vertikale Platzierung wenigstens einer nachfolgenden Schicht der Modellstruktur gewährleistet. Wenn beispielsweise eine dreidimensionale Modellstruktur überhängende Merkmale oder Formen beispielsweise in wenigstens einem Teilbereich der äußeren Oberfläche, vorzugsweise in Form einer gekrümmten Geometrie, negativer Winkel, Hohlraum, Vertiefung, Bohrung, Kanal oder ähnliches, aufweist, wird die dreidimensionale Modellstruktur vorzugsweise mit wenigstens einer angrenzenden Stützstruktur aufgebaut, die lediglich während des additiven Verfahrens verwendet und anschließend entfernt wird, um die endgültige Form der hergestellten dreidimensionalen Modellstruktur freizulegen.

Vorzugsweise weist die Stützstruktur wenigstens eine (Zahl=1) zweite Schicht, vorzugsweise 1, 2, 3, 4, 5 oder mehr Schichten, aus wenigstens einem Stützmaterial auf, die in einem konfigurierten zweiten Muster angeordnet ist. Weiter bevorzugt weist die Stützstruktur wenigstens einen zweiten Stapel von Schichten auf, wobei der zweite Schichtstapel vorzugsweise 2, 3, 4, 5 oder mehr Schichten aus wenigstens einem Stützmaterial aufweist, die in einem konfigurierten zweiten Muster angeordnet sind. Weiter bevorzugt sind die einzelnen Schichten des wenigstens einen zweiten Schichtstapels unmittelbar aufeinander in einem konfigurierten zweiten Muster angeordnet.

Der Begriff "Stützmaterial" bezeichnet vorzugsweise die im erfindungsgemäßen Verfahren zur Herstellung der wenigstens einen Stützstruktur verwendete polymere Zusammensetzung umfassend (i) wenigstens ein elastomeres, erstes Polymer mit einem Schmelzpunkt von unter 100°C, weiter bevorzugt von 99°C oder weniger, weiter bevorzugt 98°C oder weniger, das ausgewählt ist aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon, (ii) wenigstens ein elastomeres, unpolares, zweites Polymer mit einem Schmelzpunkt aus einem Bereich von 100°C bis 180°C, vorzugsweise von 101°C bis 179°C, weiter bevorzugt von 102°C bis 178°C, das aus der Gruppe, die aus Polyethylen, Polypropylen, Copolymere von Polyethylen und Polypropylen sowie Mischungen davon besteht, ausgewählt ist, und (iii) optional, wenigstens ein elastomeres, drittes Polymer, das wenigstens ein styrolisches Blockcopolymer umfasst oder ist.

Unter dem Begriff "unpolares" Polymer wird vorzugsweise ein Polymer verstanden, das aus Monomeren aufgebaut ist, die vorwiegend, vorzugsweise im Wesentlichen, nur unpolare Gruppen enthalten. Ein unpolares Polymer im Sinne der Erfindung weist vorzugsweise keinen permanenten Dipoleigenschaften auf. Weiter bevorzugt wird ein unpolares Polymer aus der Gruppe, die aus Polyethylen, Polypropylen, Copolymere von Polyethylen und Polypropylen sowie Mischungen davon besteht, ausgewählt.

Die in der vorliegenden Anmeldung verwendeten Begriffe wie "erste" und "zweite", beispielsweise Schicht oder Schichtstapel oder Muster, dienen lediglich der Unterscheidung der entsprechenden Schichten, Schichtstapel oder Muster. Eine "zweite" Schicht oder Schichtstapel oder Muster aus beispielsweise wenigstens einem Stützmaterial setzt dabei nicht zwangsweise das Vorhandensein einer "ersten" Schicht oder Schichtstapel oder Muster aus wenigstens einem Stützmaterial voraus.

Das erfindungsgemäße Verfahren zur additiven Herstellung eines dreidimensionalen, weiter bevorzugt formstabilen, Objektes, umfasst folgende Schritte:
a1) sequenzielles Auftragen und Verfestigen von wenigstens einer ersten Schicht aus wenigstens einem Modellmaterial, wobei die wenigstens eine erste Schicht in einem konfigurierten ersten Muster angeordnet wird unter Erhalt einer, weiter bevorzugt formstabilen, Modellstruktur, die dem dreidimensionalen Objekt entspricht, und wobei das wenigstens eine Modellmaterial ein thermoplastisches Polymer ist, und
a2) sequenzielles Auftragen und Verfestigen von wenigstens einer zweiten Schicht aus wenigstens einem Stützmaterial, wobei die wenigstens eine zweite Schicht in einem konfigurierten zweiten Muster angeordnet wird unter Erhalt wenigstens einer, weiter bevorzugt formstabilen, Stützstruktur, wobei die Modellstruktur und die wenigstens eine Stützstruktur zumindest in einem Teilbereich der Oberfläche lösbar miteinander in Kontakt stehen, und wobei das wenigstens eine Stützmaterial wenigstens eine polymere Zusammensetzung umfasst oder daraus besteht, wobei die polymere Zusammensetzung:
   (i) wenigstens ein elastomeres, erstes Polymer mit einem Schmelzpunkt von unter 100°C, vorzugsweise von 99°C oder weniger, weiter bevorzugt von 98°C oder weniger, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, vorzugsweise in einem Anteil von 5 Gew.-% bis 70 Gew.-%, weiter bevorzugt von 6 Gew.-% bis 62 Gew.-%, weiter bevorzugt von 7 Gew.-% bis 57 Gew.-%, weiter bevorzugt von 8 Gew.-% bis 51 Gew.-%, weiter bevorzugt von 9 Gew.-% bis 47 Gew.-%, weiter bevorzugt von 10 Gew.-% bis 40 Gew.-%, jeweils bezogen auf das Gesamtgewicht der polymeren Zusammensetzung, und
   (ii) wenigstens ein elastomeres, unpolares, zweites Polymer mit einem Schmelzpunkt aus einem Bereich von 100°C bis 180°C, vorzugsweise von 101°C bis 179°C, weiter bevorzugt von 102°C bis 178°C, das aus der Gruppe, die aus Polyethylen, Polypropylen, Copolymere von Polyethylen und Polypropylen sowie Mischungen davon besteht, ausgewählt ist, vorzugsweise in einem Anteil von 10 Gew.-% bis 70 Gew.-%, vorzugsweise von 13 Gew.-% bis 65 Gew.-%, weiter bevorzugt von 15 Gew.-% bis 60 Gew.-%, weiter bevorzugt von 21 Gew.-% bis 57 Gew.-%, jeweils bezogen auf das Gesamtgewicht der polymeren Zusammensetzung, und
   (iii) optional, wenigstens ein elastomeres, drittes Polymer, das wenigstens ein styrolisches Blockcopolymer umfasst oder ist, vorzugsweise in einem Anteil von bis zu 50 Gew.-%, vorzugsweise von bis zu 40 Gew.-%, vorzugsweise in einem Anteil aus einem Bereich von 3 Gew.-% bis 50 Gew.-%, vorzugsweise von 5 Gew.-% bis 40 Gew.-%, weiter bevorzugt von 7 Gew.-% bis 35 Gew.-%, jeweils bezogen auf das Gesamtgewicht der polymeren Zusammensetzung, und
   (iv) optional, wenigstens einen anorganischen Füll- oder Verstärkungsstoff vorzugsweise in einem Anteil von bis zu 70 Gew.-%, vorzugsweise von bis zu 60 Gew.-%, weiter bevorzugt von bis zu 50 Gew.-%, weiter bevorzugt in einem Anteil aus einem Bereich von 0,5 Gew.-% bis 70 Gew.-%, vorzugsweise von 1,5 Gew.-% bis 64 Gew.-%, weiter bevorzugt von 5 Gew.-% bis 62 Gew.-%, weiter bevorzugt von 10 Gew.-% bis 55 Gew.-%, weiter bevorzugt von 19 Gew.-% bis 50 Gew.-%, weiter bevorzugt von 27 Gew.-% bis 45 Gew.-%, weiter bevorzugt von 30 Gew.-% bis 40 Gew.-%, jeweils bezogen auf das Gesamtgewicht der polymeren Zusammensetzung, und
   (v) optional wenigstens ein Additiv vorzugsweise in einem Anteil aus dem Bereich von bis zu 5 Gew-%, bevorzugt von bis zu 3 Gew.-%, weiter bevorzugt von bis zu 2 Gew.-%, jeweils bezogen auf das Gesamtgewicht der polymeren Zusammensetzung,

   wobei die Anteile der polymeren Zusammensetzung so gewählt sind, dass sie in Summe 100 Gew.-% ergeben,
   umfasst oder daraus besteht, und
b) Beaufschlagen der wenigstens einen Stützstruktur mit thermischer Energie bei einer Temperatur aus einem Bereich von 55°C bis 135°C unter Erhalt einer zumindest in Teilbereichen erweichten Stützstruktur, und
c) Abziehen der wenigstens einen zumindest in Teilbereichen erweichten Stützstruktur von der Modellstruktur unter Erhalt des dreidimensionalen, weiter bevorzugt formstabilen, Objektes.

Im erfindungsgemäßen Verfahren wird dabei zunächst durch sequenzielles oder gleichzeitiges Durchführen wenigstens eines Schrittes a1) und wenigstens eines Schrittes a2) eine, weiter bevorzugt formstabile, Modelstruktur und wenigstens eine, weiter bevorzugt formstabile, Stützstruktur bereitgestellt, wobei die Modellstruktur und die wenigstens eine Stützstruktur zumindest in einem Teilbereich der Oberfläche lösbar miteinander in Kontakt stehen. Dabei können die einzelnen Schritte a1) und a2) des erfindungsgemäßen Verfahrens unabhängig voneinander einmal oder mehrmals, vorzugsweise 1-mal, 2-mal, 3-mal oder mehr, durchgeführt werden, wobei die Reihenfolge der Schritte a1) und a2) beliebig ist.

Im erfindungsgemäßen Verfahren wird nachfolgend die wenigstens eine Stützstruktur von der hergestellten Modelstruktur entfernt vorzugsweise durch sequenzielles Durchführen der Schritte b) und c), wobei nach Abziehen der wenigstens einen zumindest in Teilbereichen erweichten Stützstruktur von der Modellstruktur in Schritt c) ein dreidimensionales, weiter bevorzugt formstabiles, Objekt erhalten wird.

Im erfindungsgemäßen Verfahren wird vorzugsweise beim Entfernen der wenigstens einen Stützstruktur von der Modellstruktur, vorzugsweise nach Schritt a1) und Schritt a2) und vor, während und/oder nach den Schritten b) und/oder c), weiter bevorzugt nach Schritt a1) und Schritt a2) und vor, während und/oder nach Schritt b) und/oder nach Schritt c), kein organisches Lösungsmittel und/oder kein anorganisches Lösungsmittel, insbesondere kein Wasser, verwendet. Weiter bevorzugt wird im weiterhin erfindungsgemäßen Verfahren beim Entfernen der wenigstens einen Stützstruktur von der Modellstruktur, vorzugsweise nach Schritt a1) und Schritt a2) und vor, während und/oder nach den Schritten b) und/oder c), weiter bevorzugt vor, während und/oder nach Schritt b) und/oder nach Schritt c), keine Säure, d.h. keine Verbindung, die als Protonen-abgebende Verbindung, Brønsted-Säure, oder Protonendonator bezeichnet werden kann, keine Base, d.h. keine Verbindung, die als Protonen-aufnehmende Verbindung, Brønsted-Base, oder Protonenakzeptor bezeichnet werden kann, und keine Kombinationen davon und keine Mischungen davon verwendet.

Vorzugsweise stehen zumindest vor Schritt c) des erfindungsgemäßen Verfahrens die Modellstruktur und die wenigstens eine Stützstruktur zumindest in einem Teilbereich der jeweiligen Oberfläche lösbar miteinander in Kontakt. Weiter bevorzugt bildet dabei der der Modellstruktur zugewandte Teilbereich der Oberfläche der wenigstens einen Stützstruktur, der mit der Modellstruktur lösbar in Kontakt steht, das komplementär-negative Abbild des entsprechenden Teilbereichs der Oberfläche der Modellstruktur aus.

In Schritt a1) des erfindungsgemäßen Verfahrens erfolgt ein sequenzielles Auftragen und Verfestigen von wenigstens einer ersten Schicht aus wenigstens einem Modellmaterial, wobei die wenigstens eine erste Schicht in einem konfigurierten ersten Muster angeordnet wird unter Erhalt einer Modellstruktur, die dem dreidimensionalen Objekt entspricht, und wobei das wenigstens eine Modellmaterial ein thermoplastisches Polymer ist.

Das sequenzielle Auftragen und Verfestigen in Schritt a1) kann unabhängig von Schritt a2) durch vorzugsweises konsekutives oder kontinuierliches Auftragen und Verfestigen von wenigstens einer ersten Schicht aus wenigstens einem Modellmaterial erfolgen.

Vorzugsweise umfasst das wenigstens eine Modellmaterial ein thermoplastisches Polymer, das aus der Gruppe, die aus Polypropylen (PP), Polyamid (PA), Acrylnitril-Butadien-Styrol-Copolymer (ABS), Acrylnitril-Styrol-Acrylat-Copolymer (ASA), Polyethylenterephthalat (PETG), Polylactid (PLA), thermoplastisches Polyurethan (TPU), Polystyrol (PS), Styrol-Acrylnitril-Copolymer (SAN), Alphamethylstyrol-Acrylnitril-Copolymer (AMSAN) und Mischungen davon besteht, ausgewählt wird, oder besteht daraus.

Weiter bevorzugt weist ein geeignetes Modellmaterial weiterhin wenigstens einen anorganischen Füll- oder Verstärkungsstoff auf, wobei der anorganische Füll- oder Verstärkungsstoff vorzugsweise aus der Gruppe, die aus wenigstens einen mineralischen, partikulären Feststoff, anorganischen Verstärkungsfasern und Mischungen davon besteht, ausgewählt ist.

Ein mineralischer, partikulärer Feststoff wird vorzugsweise aus der Gruppe, die aus Talkum, Metallcarbonat, vorzugsweise Calciumcarbonat, weiter bevorzugt Kreide, Ruß, Glimmer, Kaolin, Wollastonit, Glaskugeln, Bariumsulfat und Mischungen davon, weiter bevorzugt Talkum, Kreide, Ruß, Glimmer, Kaolin, Wollastonit, Glaskugeln, Bariumsulfat und Mischungen davon, weiter bevorzugt Talkum, Kreide, Ruß und Mischungen davon, ausgewählt.

Geeignete anorganische Verstärkungsfasern werden vorzugsweise aus der Gruppe, die aus Kohlenstofffasern, vorzugsweise Carbon-Kurzfasern, Keramikfasern, Basaltfasern, Glasfasern, Kohlenstoffnanoröhrchen, metallische Verstärkungsfasern, insbesondere Stahlfasern, und Mischungen davon, vorzugsweise Kohlenstofffasern, Keramikfasern, Basaltfasern, Glasfasern und Mischungen davon, weiter bevorzugt Keramikfasern, Basaltfasern, Glasfasern und Mischungen davon, weiter bevorzugt Basaltfasern, Glasfasern und Mischungen davon, weiter bevorzugt Glasfasern, besteht, ausgewählt.

Geeignete Keramikfasern werden vorzugsweise aus der Gruppe, die aus Aluminoborosilikatfasern, Aluminosilikatfasern, Aluminiumoxidfasern und Mischungen davon besteht, ausgewählt.

Bei einer bevorzugten Ausführungsform sind die in dem verwendeten Modellmaterial enthaltenen Verstärkungsfasern Glasfasern oder umfassen diese, wobei geeignete Glasfasern als Flachfasern oder als Rundfasern oder als Mischung von Flachfasern und Rundfasern ausgestaltet sein können.

Geeignete anorganische Verstärkungsfasern können vorzugsweise beschichtet oder unbeschichtet sein, wobei eine Beschichtung der anorganischen Verstärkungsfasern auf der gesamten Oberfläche der Fasern oder nur auf wenigstens einem Teilbereich der Oberfläche angeordnet sein kann.

Weiter bevorzugt wird der wenigstens eine in dem erfindungsgemäß zu verwendenden Modellmaterial enthaltene anorganische Füll- oder Verstärkungsstoff aus der Gruppe, die aus Kreide, Talkum, Ruß, Glimmer, Kaolin, Wollastonit, Glaskugeln, Glasfasern, Basaltfasern, Kohlefasern, vorzugsweise Carbon-Kurzfasern, Bariumsulfat und Mischungen davon, vorzugsweise Ruß, Kreide, Talkum, Glimmer, Kaolin, Wollastonit, Glaskugeln, Glasfasern, Basaltfasern, Bariumsulfat und Mischungen davon, weiter bevorzugt Ruß, Kreide, Talkum, Glimmer, Kaolin, Glaskugeln, Glasfasern, Basaltfasern, Bariumsulfat und Mischungen davon, weiter bevorzugt Ruß, Kreide, Talkum, Glasfasern, und Mischungen davon, besteht, ausgewählt, weiter bevorzugt in einem Anteil von bis zu 70 Gew.-%, vorzugsweise von bis zu 60 Gew.-%, weiter bevorzugt in einem Anteil aus einem Bereich von 0 Gew.-% bis 50 Gew.-%, weiter bevorzugt in einem Anteil aus einem Bereich von 0,5 Gew.-% bis 70 Gew.-%, vorzugsweise von 1,5 Gew.-% bis 64 Gew.-%, weiter bevorzugt von 5 Gew.-% bis 62 Gew.-%, weiter bevorzugt von 10 Gew.-% bis 55 Gew.-%, weiter bevorzugt von 19 Gew.-% bis 50 Gew.-%, weiter bevorzugt von 23 Gew.-% bis 49 Gew.-%, weiter bevorzugt von 29 Gew.-% bis 47 Gew.-%, weiter bevorzugt von 36 Gew.-% bis 44 Gew.-%, weiter bevorzugt von 30 Gew.-% bis 40 Gew.-%, jeweils bezogen auf das Gesamtgewicht des Modellmaterials.

Vorzugsweise kann durch Verwendung von wenigstens einem Füll- oder Verstärkungsstoff die Dimensionsbeständigkeit der erhaltenen Modellstruktur verbessert werden. Durch Verwendung von wenigstens einem Füll- oder Verstärkungsstoff in dem erfindungsgemäß zu verwendenden Modellmaterial ist es vorzugsweise weiterhin möglich, die Schwindung des Modellmaterials zu reduzieren bzw. im Wesentlichen vollständig zu vermeiden, ohne dass sich weiter bevorzugt die Verarbeitbarkeit der Modellmaterials, beispielsweise in dem erfindungsgemäßen Verfahren, wesentlich verschlechtert.

Ein erfindungsgemäß zu verwendendes Modellmaterial kann weiterhin wenigstens ein Additiv umfassen, das einzeln oder in Kombination aus der Gruppe, die aus Stabilisator, Gleitmittel, Haftmittel, Verträglichkeitsvermittler, Lichtschutzmittel, UV-Absorber, Flammschutzmittel, Hydrophobierungsmittel, Weichmacher, Antioxidationsmittel, Farbmittel, Pigment, Antistatikum, Silikonöl, Entformungsmittel, und Trennmittel besteht, ausgewählt ist, weiter bevorzugt in einem Anteil aus dem Bereich von bis zu 5 Gew-%, bevorzugt von bis zu 3 Gew.-%, weiter bevorzugt von 0 Gew.-% bis zu 2 Gew.-%, jeweils bezogen auf das Gesamtgewicht des Modellmaterials.

Durch die Zugabe von Additiven können gewünschte Eigenschaften des verwendeten Modellmaterials eingestellt werden.

Vorzugsweise erfolgt das Auftragen des wenigstens einen Modellmaterials in Schritt a1) durch zunächst zumindest teilweises Erweichen des Modellmaterials nach Einwirken von thermischer Energie, vorzugsweise bei einer Temperatur aus einem Bereich von 75 °C bis 120 °C, weiter bevorzugt aus einem Bereich von 90 °C bis 110 °C, und nachfolgenden Auftragen des zumindest teilweise erweichten, vorzugsweise zumindest fließfähigen oder plastisch verformbaren, Modellmaterials.

Vorzugsweise kann das in Schritt a1) verwendete wenigstens eine Modellmaterial jeweils unabhängig voneinander als partikuläres Modellmaterial, vorzugsweise als Pulver, Gries, Krümel, oder Granulat, und/oder fadenartiges Modellmaterial, vorzugsweise Filament und/oder Draht, vorliegen.

Weiter bevorzugt erfolgt bei Verwendung des wenigstens einen Modellmaterials als partikuläres Modellmaterial, das vorzugsweise als Pulver, Gries, Krümel, und/oder Granulat vorliegt, vor und/oder während Schritt a1) des erfindungsgemäßen Verfahrens eine Plastifizierung des partikulären Modellmaterials, wobei weiter bevorzugt ein homogenes, zumindest fließfähiges oder plastisch verformbares Modellmaterial erhalten wird, das nachfolgend in Schritt a1) aufgetragen werden kann. Weiter bevorzugt kann das Plastifizieren eines partikulären Modellmaterials, das vorzugsweise als Pulver, Gries, Krümel, und/oder Granulat vorliegt, unter Verwendung wenigstens einer aus dem Stand der Technik bekannten Plastifizierungseinheit, beispielsweise in Form einer Schnecke, weiter bevorzugt unter Einwirken von thermischer Energie, vorzugsweise bei einer Temperatur aus einem Bereich von 75 °C bis 120 °C, weiter bevorzugt aus einem Bereich von 90 °C bis 110 °C, erfolgen.

Bei Verwendung eines fadenförmigen Modellmaterials, vorzugsweise Filament und/oder Draht, kann auf die Verwendung einer zusätzlichen Plastifizierungseinheit, beispielsweise in Form einer Schnecke, verzichtet werden.

Weiter bevorzugt erfolgt das Auftragen des wenigstens einen Modellmaterials in Schritt a1) des erfindungsgemäßen Verfahrens durch ein, vorzugsweise kontinuierliches, Extrudieren des zumindest teilweise erweichten, vorzugsweise zumindest fließfähigen oder plastisch verformbaren, Modellmaterials durch eine Öffnung, vorzugsweise formgebende Öffnung, die auch als Düse bezeichnet werden kann.

Eine geeignete, vorzugsweise formgebende, Öffnung, kann vorzugsweise Bestandteil wenigstens einer Vorrichtung sein, die zum Auftragen einer zumindest teilweise erweichten, vorzugsweise zumindest fließfähigen oder plastisch verformbaren, polymeren Masse, vorzugsweise Modellmaterial, konfiguriert und geeignet ist.

Eine geeignete Vorrichtung zum Auftragen des wenigstens einen Modellmaterials in Schritt a1) des erfindungsgemäßen Verfahrens ist im Stand der Technik bekannt und kann beispielsweise in Form eines Druckkopfes eines additive Fertigungssystems bereitgestellt werden.

Weiter bevorzugt umfasst eine geeignete Vorrichtung zum Auftragen des wenigstens einen Modellmaterials in Schritt a1) des erfindungsgemäßen Verfahrens, vorzugsweise Druckkopf eines additive Fertigungssystems, neben wenigstens einer geeigneten, vorzugsweise formgebenden, Öffnung, die zum Auftragen des wenigstens einen Modellmaterials konfiguriert und geeignet ist, weiterhin auch eine Vorrichtung zur Bereitstellung von thermischer Energie, vorzugsweise bei einer Temperatur aus einem Bereich von 75 °C bis 120 °C, weiter bevorzugt aus einem Bereich von 90 °C bis 110 °C, um ein zumindest teilweises Erweichen des Modellmaterials zu ermöglichen.

Weiter bevorzugt umfasst eine geeignete Vorrichtung zum Auftragen des wenigstens einen Modellmaterials in Schritt a1) des erfindungsgemäßen Verfahrens, vorzugsweise Druckkopf eines additive Fertigungssystems, weiterhin auch eine Vorrichtung zum, vorzugsweise kontinuierlichen, Transport des zumindest teilweise erweichten, vorzugsweise zumindest fließfähigen oder plastisch verformbaren, Modellmaterials durch wenigstens eine, vorzugsweise formgebende, Öffnung der Vorrichtung.

Eine geeignete Vorrichtung zum Auftragen des wenigstens einen Modellmaterials in Schritt a1) des erfindungsgemäßen Verfahrens, vorzugsweise Druckkopf eines additive Fertigungssystems, umfasst vorzugsweise weiterhin auch eine Vorrichtung zum Speichern des Modellmaterials, beispielsweise in Form eines Behälters, der zur Aufnahme und Lagerung von partikulärem Modellmaterial geeignet ist, oder einer Spule, die zur Aufnahme und Lagerung von fadenartigem Modellmaterial geeignet ist.

Nach oder während des schichtweisen Auftragens des zumindest teilweise erweichten, vorzugsweise zumindest fließfähigen oder plastisch verformbaren, Modellmaterials erfolgt vorzugsweise ein Aushärten des wenigstens einen Modellmaterials unter Erhalt einer zumindest in Teilbereichen ausgehärteten Schicht. Anschließend kann auf die zumindest in Teilbereichen ausgehärteten Schicht wenigstens eine weitere Schicht des verwendeten Modellmaterials und/oder wenigstens eine Schicht des Stützmaterials in analoger Weise aufgebracht werden.

Das Aushärten des verwendeten Modellmaterials erfolgt vorzugsweise durch Abkühlen des verwendeten Modellmaterials, vorzugsweise auf Raumtemperatur.

In Schritt a2) des erfindungsgemäßen Verfahrens erfolgt ein sequenzielles Auftragen und Verfestigen von wenigstens einer zweiten Schicht aus wenigstens einem Stützmaterial, wobei die wenigstens eine zweite Schicht in einem konfigurierten zweiten Muster angeordnet wird unter Erhalt wenigstens einer Stützstruktur.

Das sequenzielle Auftragen und Verfestigen in Schritt a2) kann unabhängig von Schritt a1) durch vorzugsweises konsekutives oder kontinuierliches Auftragen und Verfestigen von wenigstens einer zweiten Schicht aus wenigstens einem Stützmaterial erfolgen.

Vorzugsweise erfolgt das sequenzielle Auftragen des wenigstens einem Stützmaterials in Schritt a2) durch zumindest teilweises Erweichen des Stützmaterials nach Einwirken von thermischer Energie, vorzugsweise bei einer Temperatur aus einem Bereich von 85 °C bis 120 °C, weiter bevorzugt aus einem Bereich von 90 °C bis 110 °C, und nachfolgenden Auftragen des zumindest teilweise erweichten Stützmaterials.

Das wenigstens eine Stützmaterial umfasst oder besteht aus wenigstens einer erfindungsgemäßen polymere Zusammensetzung oder einer in dem erfindungsgemäßen Verfahren zu verwendende polymere Zusammensetzung.

Eine erfindungsgemäße polymere Zusammensetzung und eine in dem erfindungsgemäßen Verfahren zur additiven Herstellung eines dreidimensionalen, weiter bevorzugt formstabilen, Objektes als Stützmaterial zu verwendende polymere Zusammensetzung umfasst dabei jeweils:
(i) wenigstens ein elastomeres, erstes Polymer mit einem Schmelzpunkt von unter 100°C, vorzugsweise von 99°C oder weniger, weiter bevorzugt 98°C oder weniger, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und
(ii) wenigstens ein elastomeres, unpolares, zweites Polymer mit einem Schmelzpunkt aus einem Bereich von 100°C bis 180°C, vorzugsweise von 101°C bis 179°C, weiter bevorzugt von 102°C bis 178°C, das aus der Gruppe, die aus Polyethylen, Polypropylen, Copolymere von Polyethylen und Polypropylen sowie Mischungen davon besteht, und
(iii) optional, wenigstens ein elastomeres, drittes Polymer, das wenigstens ein styrolisches Blockcopolymer umfasst oder ist.

Weiter bevorzugt sind das (i) wenigstens eine elastomere, erste Polymer mit einem Schmelzpunkt von unter 100°C und das (ii) wenigstens eine elastomere, unpolare, zweite Polymer mit einem Schmelzpunkt aus einem Bereich von 100°C bis 180°C, und das optional enthaltene (iii) wenigstens eine elastomere, dritte Polymer, das wenigstens ein styrolisches Blockcopolymer umfasst oder ist, nicht miteinander copolymerisiert und bilden daher kein Copolymerisat.

Eine erfindungsgemäße polymere Zusammensetzung und eine in dem erfindungsgemäßen Verfahren zu verwendende polymere Zusammensetzung umfassen vorzugsweise jeweils eine nicht co-polymerisierte Mischung aus
(i) wenigstens einem elastomeren, ersten Polymer mit einem Schmelzpunkt von unter 100°C, vorzugsweise von 99°C oder weniger, weiter bevorzugt 98°C oder weniger, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und
(ii) wenigstens einem elastomeren, unpolaren, zweiten Polymer mit einem Schmelzpunkt aus einem Bereich von 100°C bis 180°C, vorzugsweise von 101°C bis 179°C, weiter bevorzugt von 102°C bis 178°C, das aus der Gruppe, die aus Polyethylen, Polypropylen, Copolymere von Polyethylen und Polypropylen sowie Mischungen davon besteht, ausgewählt ist, und
(iii) optional, wenigstens ein elastomeres, drittes Polymer, das wenigstens ein styrolisches Blockcopolymer umfasst oder ist.

Vorzugsweise weist eine erfindungsgemäße polymere Zusammensetzung und/oder eine in dem erfindungsgemäßen Verfahren zur additiven Herstellung eines dreidimensionalen, weiter bevorzugt formstabilen, Objektes als Stützmaterial zu verwendende polymere Zusammensetzung wenigstens ein elastomeres, erstes Polymer mit einem Schmelzpunkt von unter 100°C, vorzugsweise von 99°C oder weniger, weiter bevorzugt von 98°C oder weniger, auf, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon, weiter bevorzugt aus der Gruppe, die aus Ethylen-Octen-Copolymeren mit einer Dichte bei 23°C aus einem Bereich von 0,850 g/cm³ bis 0,90 g/cm³, vorzugsweise bestimmt gemäß dem in ASTM D792-20 angegeben Verfahren, und einem DSC-Schmelzpunkt aus einem Bereich von 30°C bis 99°C, vorzugsweise von 31°C bis 98°C, weiter bevorzugt von 32°C bis 97°C, weiter bevorzugt von 33°C bis 95°C, weiter bevorzugt von 34°C bis 93°C, weiter bevorzugt von 35°C bis 89°C, weiter bevorzugt von 36°C bis 87°C, weiter bevorzugt von 37°C bis 85°C, Ethylen-Vinylacetat-Copolymer mit einem Vinylacetat-Anteil von 5 Gew.-% bis 35 Gew.-%, vorzugsweise von 6 Gew.% bis 33 Gew.-%, weiter bevorzugt von 7 Gew.-% bis 30 Gew.-%, jeweils bezogen auf die eingesetzte Menge an Ethylen-Vinylacetat-Copolymer, und einem DSC-Schmelzpunkt aus einem Bereich vom 70 °C bis 99 °C, vorzugsweise von 73°C bis 98°C, weiter bevorzugt von 75°C bis 97°C, weiter bevorzugt von 81°C bis 95°C, Ethylen-Butylacrylat-Copolymer (EBA) mit einem Butylacrylat-Anteil von 15 Gew.-% bis 30 Gew.-%, vorzugsweise von 17 Gew.-% - 29 Gew.-%, jeweils bezogen auf die eingesetzte Menge an Ethylen-Butylacrylat-Copolymer, und einem DSC-Schmelzpunkt aus einem Bereich vom 70 °C bis 99 °C, vorzugsweise von 73°C bis 98°C, weiter bevorzugt von 75°C bis 97°C, weiter bevorzugt von 81°C bis 95°C, Ethylen-Ethylacrylat-Copolymer (EEA) und Mischungen davon besteht, ausgewählt ist.

Vorzugsweise weist eine erfindungsgemäße polymere Zusammensetzung und/oder eine erfindungsgemäß zu verwendende polymere Zusammensetzung das wenigstens eine elastomere, erste Polymer mit einem Schmelzpunkt von unter 100°C, weiter bevorzugt von 99°C oder weniger, weiter bevorzugt von 98°C oder weniger, in einem Anteil aus einem Bereich von 5 Gew.-% bis 70 Gew.-%, vorzugsweise von 6 Gew.-% bis 62 Gew.-%, weiter bevorzugt von 7 Gew.-% bis 57 Gew.-%, weiter bevorzugt von 8 Gew.-% bis 51 Gew.-%, vorzugsweise von 9 Gew.-% bis 47 Gew.-% , weiter bevorzugt von 10 Gew.-% bis 40 Gew.-%, jeweils bezogen auf das Gesamtgewicht der polymeren Zusammensetzung, auf.

Geeignete kommerziell erhältliche Polymere, die als elastomeres, erstes Polymer einzeln oder in Kombination miteinander verwendet werden können, sind beispielsweise Polyolefin-Elastomere der Typenbezeichnung ENGAGE^{®} 8842 und 8411, die kommerziell erhältlich sind bei Dow, Inc.(Midland, MI, US), oder Mischungen davon, Ethylen-Vinylacetat-Copolymere (EVA) der Typenbezeichnung TAISOX^{®} EVA 7240M mit einem Vinylacetat-Anteil von 15 Gew.-%, TAISOX^{®} EVA 7360M mit einem Vinylacetat-Anteil von 21 Gew.-%, oder TAISOX^{®} EVA 7470M mit einem Vinylacetat-Anteil von 26 Gew.-% der Formosa Plastics Corporation (Taipeh, TW) oder Mischungen davon, Ethylen-Butylacrylat-Copolymere (EBA) der Typenbezeichnung Lucofin^{®} 1400PN mit einem Butylacrylat-Anteil von 17 Gew.-%, Lucofin^{®} 2400MN mit einem Butylacrylat-Anteil von 27 Gew.-% der LUCOBIT AG (Wesseling, DE) oder mit der Typenbezeichnung ELVALOY^{®} AC 2715, ELVALOY^{®} AC 3117, ELVALOY^{®} AC ELVALOY^{®} AC 3135, ELVALOY^{®} AC 3217, ELVALOY^{®} AC 35035, ELVALOY^{®} AC 3427, oder ELVALOY^{®} AC 3717, die kommerziell erhältlich sind bei Dow, Inc., oder Mischungen davon, Ethylen-Ethylacrylat-Copolymere (EEA) der Typenbezeichnung ELVALOY^{®} AC 2116, ELVALOY^{®} AC 2615 oder ELVALOY^{®} AC 2618, die kommerziell erhältlich sind bei Dow, Inc., oder Mischungen davon.

Vorzugsweise weist eine erfindungsgemäße polymere Zusammensetzung und/oder eine erfindungsgemäß zu verwendende polymere Zusammensetzung weiterhin wenigstens ein elastomeres, unpolares, zweites Polymer mit einem Schmelzpunkt aus einem Bereich von 100°C bis 180°C, vorzugsweise von 101°C bis 179°C, weiter bevorzugt von 102°C bis 178°C, auf, das aus der Gruppe, die aus Polyethylen, Polypropylen, Copolymere von Polyethylen und Polypropylen sowie Mischungen davon besteht, weiter bevorzugt aus der Gruppe, die aus Olefin-Block-Copolymer mit einer Dichte bei 23°C aus einem Bereich von 0,877 g/cm³ bis 0,90 g/cm³, vorzugsweise bestimmt gemäß dem in ASTM D792-20 angegeben Verfahren, und einem DSC-Schmelzpunkt aus einem Bereich von 105°C bis 135°C, vorzugsweise von 109°C bis 131°C, weiter bevorzugt von 113°C bis 127°C, weiter bevorzugt von 119°C bis 125°C, Linear-Low-Density-Polyethylen (LLDPE) mit DSC-Schmelzpunkt aus einem Bereich von 101 bis 130°C, vorzugsweise von 105°C bis 127°C, weiter bevorzugt von 110°C bis 123°C, weiter bevorzugt von 115°C bis 121°C, Low-Density-Polyethylen (LDPE) mit DSC-Schmelzpunkt aus einem Bereich von 101°C bis 115°C, vorzugsweise von 103°C bis 113°C, weiter bevorzugt von 105°C bis 111°C, weiter bevorzugt von 107°C bis 109°C, Very-Low-Density-Polyethylen (VLDPE) mit DSC-Schmelzpunkt aus einem Bereich von 101°C bis 130°C, vorzugsweise von 105°C bis 127°C, weiter bevorzugt von 110°C bis 123°C, weiter bevorzugt von 115°C bis 121°C, Medium-Density-Polyethylen (MDPE) mit DSC-Schmelzpunkt aus einem Bereich von 105 bis 140°C, vorzugsweise von 109°C bis 135°C, weiter bevorzugt von 113°C bis 131°C, weiter bevorzugt von 119°C bis 125°C, High-Density-Polyethylen (HDPE) mit DSC-Schmelzpunkt aus einem Bereich von 105 bis 140°C, vorzugsweise von 109°C bis 135°C, weiter bevorzugt von 113°C bis 131°C, weiter bevorzugt von 121°C bis 127°C, Polypropylen-Homopolymer (PPH) mit einem DSC-Schmelzpunkt aus einem Bereich von 140 °C bis 180°C, vorzugsweise von 145°C bis 175°C, weiter bevorzugt von 151°C bis 171°C, weiter bevorzugt von 153°C bis 169°C, weiter bevorzugt von 155 °C bis 165 °C, Polypropylen-Ethylen-Copolymere (PP-Copolymer) mit einem DSC-Schmelzpunkt aus einem Bereich von 140 °C bis 180°C, vorzugsweise von 145°C bis 175°C, weiter bevorzugt von 151°C bis 171°C, weiter bevorzugt von 153°C bis 169°C, weiter bevorzugt von 155 °C bis 165 °C, und Mischungen davon besteht, ausgewählt ist.

Vorzugsweise weist eine erfindungsgemäße polymere Zusammensetzung und/oder eine in dem erfindungsgemäßen Verfahren zur additiven Herstellung eines dreidimensionalen, weiter bevorzugt formstabilen, Objektes zu verwendende polymere Zusammensetzung das wenigstens eine elastomere, unpolare, zweite Polymer mit einem Schmelzpunkt aus einem Bereich von 100°C bis 180°C, vorzugsweise von 101°C bis 179°C, weiter bevorzugt von 102°C bis 178°C, in einem Anteil aus einem Bereich von 10 Gew.-% bis 70 Gew.-%, vorzugsweise von 13 Gew.-% bis 65 Gew.-%, weiter bevorzugt von 15 Gew.-% bis 60 Gew.-%, weiter bevorzugt von 21 Gew.-% bis 57 Gew.-%, jeweils bezogen auf das Gesamtgewicht der polymeren Zusammensetzung, auf.

Geeignete kommerziell erhältliche Polymere, die als elastomeres, unpolares, zweites Polymer einzeln oder in Kombination miteinander verwendet werden können, sind beispielsweise Polypropylen-Homopolymere (PPH) der Typenbezeichnung DuPure^{®}, die kommerziell erhältlich sind von Ducor Petrochemicals B.V. (Rozenburg, NL), vorzugsweise DuPure^{®} L50, DuPure^{®} T76, DuPure^{®} U76A, DuPure^{®} R76, DuPure^{®} T88E, DuPure^{®} G86E, DuPure^{®} G72 und Mischungen davon, Polypropylen-Random-Copolymere (PPR) der Typenbezeichnung DuClear^{®}, die kommerziell erhältlich sind von Ducor Petrochemicals B.V., vorzugsweise DuClear^{®} QT 85A, DuClear^{®} QU 85A und Mischungen davon, Linear-Low-Density-Polyethylen-Polymere (LLDPE) der Typenbezeichnung PETROTHENE^{®} GA 1832 NATURAL oder Lupolen^{®} 3621 M RM, die jeweils kommerziell erhältlich sind von LyondellBasell Industries Holdings, B.V.(Rotterdam, NL), oder der Typenbezeichnung INEOS^{®} LL 6930AA (C6-LLDPE), das kommerziell erhältlich ist von INEOS Styrolution Group GmbH (Frankfurt, DE), oder Mischungen davon, Very-Low-Density-Polyethylen-Polymere (VLDPE) der Typenbezeichnung CLEARFLEX^{®} PE-VLDP der Versalis S.p.A. (San Donato Milanese, IT), vorzugsweise CLEARFLEX^{®} PE-VLD FF D0, CLEARFLEX^{®} PE-VLD MP D0 und Mischungen davon, Low-Density-Polyethylen-Polymere (LDPE) der Typenbezeichnung LUPOLEN^{®} 1800H der LyondellBasell Industries Holdings, B.V., High-Density-Polyethylen-Polymere (HDPE) der Typenbezeichnung SABIC^{®} HDPE M 1053 oder SABIC^{®} M864SE der SABIC Polyolefine GmbH (Gelsenkirchen, DE) oder BOREALIS^{®} MG9621B der Borealis AG (Wien, AT) oder Mischungen davon.

Vorzugsweise weist eine erfindungsgemäße polymere Zusammensetzung und/oder eine erfindungsgemäß zu verwendende polymere Zusammensetzung optional weiterhin wenigstens ein elastomeres, drittes Polymer auf, das wenigstens ein styrolisches Blockcopolymer umfasst oder ist.

Weiter bevorzugt wird das wenigstens eine elastomere, dritte Polymer aus der Gruppe, die aus Styrol-Butadien Block Copolymere (SBC), Styrol-Butadien-Styrol-Copolymer (SBS), Styrol-Ethylen-Butylen-Styrol-Copolymer (SEBS), Styrol-Ethylen-Propylen-Styrol-Copolymer (SEPS), und Mischungen davon besteht, ausgewählt.

Vorzugsweise weist eine erfindungsgemäße polymere Zusammensetzung und/oder eine erfindungsgemäß zu verwendende polymere Zusammensetzung das wenigstens eine elastomere, dritte Polymer in einem Anteil von bis zu 50 Gew.-%, vorzugsweise von bis zu 40 Gew.-%, vorzugsweise in einem Anteil aus einem Bereich von 3 Gew.-% bis 50 Gew.-%, vorzugsweise von 5 Gew.-% bis 40 Gew.-%, weiter bevorzugt von 7 Gew.-% bis 35 Gew.-%, jeweils bezogen auf das Gesamtgewicht der polymeren Zusammensetzung, auf.

Geeignete kommerziell erhältliche Polymere, die als elastomeres, drittes Polymer einzeln oder in Kombination miteinander verwendet werden können, sind beispielsweise Polymere der Typenbezeichnung SEPTON^{®}, die kommerziell erhältlich sind von Kuraray Europe GmbH (Hattersheim, DE), vorzugsweise SEPTON^{®} 4055FF-S, SEPTON^{®} 4055FF-S, SEPTON^{®} 4099, SEPTON^{®} 2063, SEPTON^{®} Q-1250 und Mischungen davon, oder der Typenbezeichnung KRATON^{®}, die kommerziell erhältlich sind von Kraton Corporation (The Woodlands, TX, US), vorzugsweise KRATON^{®} G1651 EU, KRATON^{®} G1633 EU und Mischungen davon, oder der Typenbezeichnung TAIPOL^{®}, die kommerziell erhältlich sind von TSRC Corporation (Kaohsiung City, TW), vorzugsweise, TAIPOL^{®} SEBS H6151, und Mischungen davon.

Durch optionale Verwendung wenigstens eines elastomeren, dritten Polymers, das wenigstens ein styrolisches Blockcopolymer umfasst oder ist, in der erfindungsgemäßen polymeren Zusammensetzung und/oder der erfindungsgemäß zu verwendenden polymeren Zusammensetzung kann vorzugsweise jeweils das gummielastische Verhalten der polymeren Zusammensetzung erhöht werden.

Vorzugsweise weist eine erfindungsgemäße polymere Zusammensetzung und/oder eine erfindungsgemäß zu verwendende polymere Zusammensetzung weiterhin jeweils unabhängig voneinander wenigstens einen anorganischen Füll- oder Verstärkungsstoff auf, wobei der anorganische Füll- oder Verstärkungsstoff vorzugsweise aus der Gruppe, die aus wenigstens einen mineralischen, partikulären Feststoff, anorganischen Verstärkungsfasern und Mischungen davon besteht, ausgewählt ist.

Ein mineralischer, partikulärer Feststoff wird vorzugsweise aus der Gruppe, die aus Talkum, Metallcarbonat, vorzugsweise Calciumcarbonat, weiter bevorzugt Kreide, Ruß, Glimmer, Kaolin, Wollastonit, Glaskugeln, Bariumsulfat und Mischungen davon, weiter bevorzugt Talkum, Kreide, Ruß, Glimmer, Kaolin, Wollastonit, Glaskugeln, Bariumsulfat und Mischungen davon ausgewählt.

Unter anorganischen Verstärkungsfasern werden vorzugsweise Kohlenstofffasern, vorzugsweise Carbon-Kurzfasern, Keramikfasern, Basaltfasern, Glasfasern, Kohlenstoffnanoröhrchen, metallische Verstärkungsfasern, insbesondere Stahlfasern, und Mischungen davon, vorzugsweise Kohlenstofffasern, Keramikfasern, Basaltfasern, Glasfasern und Mischungen davon, weiter bevorzugt Keramikfasern, Basaltfasern, Glasfasern und Mischungen davon, weiter bevorzugt Basaltfasern, Glasfasern und Mischungen davon, weiter bevorzugt Glasfasern verstanden.

Geeignete Keramikfasern sind beispielsweis Keramikfasern der Firma 3M Corporation (Saint Paul, MN, USA), die unter der Handelsbezeichnung Nextel^{®} kommerziell erhältlich sind. Geeignete Keramikfasern werden vorzugsweise aus der Gruppe, die aus Aluminoborosilikatfasern, Aluminosilikatfasern, Aluminiumoxidfasern und Mischungen davon besteht, ausgewählt.

Bei einer bevorzugten Ausführungsform sind die in der erfindungsgemäßen polymeren Zusammensetzung und/oder der erfindungsgemäß als Stützmaterial zu verwendenden polymeren Zusammensetzung enthaltenen Verstärkungsfasern Glasfasern oder umfassen diese. Die Glasfasern können als Flachfasern oder als Rundfasern oder als Mischung von Flachfasern und Rundfasern ausgestaltet sein.

Geeignete anorganische Verstärkungsfasern können vorzugsweise beschichtet oder unbeschichtet sein, wobei eine Beschichtung der anorganischen Verstärkungsfasern auf der gesamten Oberfläche der Fasern oder nur auf wenigstens einem Teilbereich der Oberfläche angeordnet sein kann.

Weiter bevorzugt wird der wenigstens eine in der erfindungsgemäßen polymeren Zusammensetzung und/oder der erfindungsgemäß als Stützmaterial zu verwendenden polymeren Zusammensetzung enthaltene anorganische Füll- oder Verstärkungsstoff aus der Gruppe, die aus Kreide, Talkum, Ruß, Glimmer, Kaolin, Wollastonit, Glaskugeln, Glasfasern, Basaltfasern, Kohlefasern, vorzugsweise Carbon-Kurzfasern, Bariumsulfat und Mischungen davon, vorzugsweise Kreide, Talkum, Glimmer, Kaolin, Wollastonit, Glaskugeln, Glasfasern, Basaltfasern, Bariumsulfat und Mischungen davon, weiter bevorzugt Kreide, Talkum, Glimmer, Kaolin, Glaskugeln, Glasfasern, Basaltfasern, Bariumsulfat und Mischungen davon, weiter bevorzugt Kreide, Talkum, Glasfasern, und Mischungen davon, besteht, ausgewählt.

Vorzugsweise weist eine erfindungsgemäße polymere Zusammensetzung und/oder eine erfindungsgemäß zu verwendende polymere Zusammensetzung den wenigstens einen anorganischen Füll- oder Verstärkungsstoff vorzugsweise in einem Anteil von bis zu 70 Gew.-%, vorzugsweise von bis zu 60 Gew.-%, weiter bevorzugt von bis zu 50 Gew.-%, weiter bevorzugt in einem Anteil aus einem Bereich von 0,5 Gew.-% bis 70 Gew.-%, vorzugsweise von 1,5 Gew.-% bis 64 Gew.-%, weiter bevorzugt von 5 Gew.-% bis 60 Gew.-%, weiter bevorzugt von 10 Gew.-% bis 55 Gew.-%, weiter bevorzugt von 19 Gew.-% bis 50 Gew.-%, weiter bevorzugt von 23 Gew.-% bis 49 Gew.-%, weiter bevorzugt von 29 Gew.-% bis 47 Gew.-%, weiter bevorzugt von 36 Gew.-% bis 44 Gew.-%, weiter bevorzugt von 30 Gew.-% bis 40 Gew.-%, jeweils bezogen auf das Gesamtgewicht der polymeren Zusammensetzung.

Vorzugsweise kann durch Verwendung von Füll- oder Verstärkungsstoffen die Dimensionsbeständigkeit der erhaltenen Stützstruktur verbessert werden. Durch Verwendung von wenigstens einem Füll- oder Verstärkungsstoff in der erfindungsgemäßen polymeren Zusammensetzung und/oder der erfindungsgemäß zu verwendenden polymeren Zusammensetzung ist es vorzugsweise weiterhin möglich, die Schwindung der polymeren Zusammensetzung zu reduzieren bzw. im Wesentlichen vollständig zu vermeiden, ohne dass sich weiter bevorzugt die Verarbeitbarkeit der polymeren Zusammensetzung, beispielsweise in dem erfindungsgemäßen Verfahren, wesentlich verschlechtert.

Eine erfindungsgemäße polymere Zusammensetzung und/oder eine erfindungsgemäß zu verwendende polymere Zusammensetzung kann weiterhin wenigstens ein Additiv umfassen, das einzeln oder in Kombination aus der Gruppe, die aus Stabilisator, Gleitmittel, Haftmittel, Verträglichkeitsvermittler, Lichtschutzmittel, Flammschutzmittel, Hydrophobierungsmittel, Weichmacher, Antioxidationsmittel, Farbmittel, Pigment, Antistatikum, Silikonöl, Entformungsmittel, und Trennmittel besteht, ausgewählt ist.

Ein geeignetes Additiv ist beispielsweise wenigstens ein Maleinsäureanhydridfunktionalisiertes Polymer. Maleinsäureanhydrid-funktionalisierte Polymere sind aus dem Stand der Technik bekannt und umfassen unpolare Thermoplasten und Kautschuke, die durch reaktive Extrusion mit Maleinsäureanhydrid gepfropft wurden. Durch das Maleinsäureanhydrid können die ansonsten unpolaren Polymere Bindungen mit verschiedenen Substraten und polaren Polymeren eingehen und vorzugsweise als Haftvermittler wirken. Außerdem können sie vorzugsweise durch das Pfropfen mit Maleinsäureanhydrid mit polaren Polymeren besser gemischt werden und wirken daher auch als Verträglichkeitsvermittler.

Bevorzugt weist eine erfindungsgemäße polymere Zusammensetzung und/oder eine erfindungsgemäß zu verwendende polymere Zusammensetzung das wenigstens eine Additiv in einem Anteil aus dem Bereich von bis zu 5 Gew-%, bevorzugt von bis zu 3 Gew.-%, weiter bevorzugt von bis zu 2 Gew.-%, jeweils bezogen auf das Gesamtgewicht der polymeren Zusammensetzung, auf.

Durch die Zugabe von Additiven können gewünschte Eigenschaften der erfindungsgemäßen polymeren Zusammensetzung und/oder der erfindungsgemäß zu verwendenden polymeren Zusammensetzung eingestellt werden.

Weiter bevorzugt umfasst oder besteht eine erfindungsgemäße polymere Zusammensetzung und/oder eine erfindungsgemäß zu verwendende polymere Zusammensetzung aus:
a) wenigstens einem elastomeren, ersten Polymer mit einem Schmelzpunkt von unter 100°C in einem Anteil von 5 Gew.-% bis 70 Gew.-%, vorzugsweise von 6 Gew.-% bis 62 Gew.-%, weiter bevorzugt von 7 Gew.-% bis 57 Gew.-%, weiter bevorzugt von 8 Gew.-% bis 51 Gew.-%, vorzugsweise von 9 Gew.-% bis 47 Gew.-%, weiter bevorzugt von 10 Gew.-% bis 40 Gew.-%, jeweils bezogen auf das Gesamtgewicht der polymeren Zusammensetzung, und
b) wenigstens einem elastomeren, unpolaren zweiten Polymer mit einem Schmelzpunkt aus einem Bereich von 100°C bis 180°C in einem Anteil von 10 Gew.-% bis 70 Gew.-%, vorzugsweise von 13 Gew.-% bis 65 Gew.-%, weiter bevorzugt von 15 Gew.-% bis 60 Gew.-%, weiter bevorzugt von 21 Gew.-% bis 57 Gew.-%, jeweils bezogen auf das Gesamtgewicht der polymeren Zusammensetzung, und
c) optional, wenigstens einem elastomeren, dritten Polymer in einem Anteil von bis zu 50 Gew.-%, vorzugsweise von bis zu 40 Gew.-%, vorzugsweise in einem Anteil aus einem Bereich von 3 Gew.-% bis 50 Gew.-%, vorzugsweise von 5 Gew.-% bis 40 Gew.-%, weiter bevorzugt von 7 Gew.-% bis 35 Gew.-%, jeweils bezogen auf das Gesamtgewicht der polymeren Zusammensetzung, und
d) optional, wenigstens einem anorganischen Füll- oder Verstärkungsstoff vorzugsweise in einem Anteil von bis zu 70 Gew.-%, vorzugsweise von bis zu 60 Gew.-%, weiter bevorzugt von bis zu 50 Gew.-%, weiter bevorzugt in einem Anteil aus einem Bereich von 0,5 Gew.-% bis 70 Gew.-%, vorzugsweise von 1,5 Gew.-% bis 64 Gew.-%, weiter bevorzugt von 5 Gew.-% bis 60 Gew.-%, weiter bevorzugt von 10 Gew.-% bis 55 Gew.-%, weiter bevorzugt von 19 Gew.-% bis 50 Gew.-%, weiter bevorzugt von 23 Gew.-% bis 49 Gew.-%, weiter bevorzugt von 29 Gew.-% bis 47 Gew.-%, weiter bevorzugt von 36 Gew.-% bis 44 Gew.-%, weiter bevorzugt von 30 Gew.-% bis 40 Gew.-%, jeweils bezogen auf das Gesamtgewicht der polymeren Zusammensetzung, und
e) optional, wenigstens einem Additiv vorzugsweise in einem Anteil aus dem Bereich von bis zu 5 Gew-%, bevorzugt von bis zu 3 Gew.-%, weiter bevorzugt von bis zu 2 Gew.-%, jeweils bezogen auf das Gesamtgewicht der polymeren Zusammensetzung,
mit der Maßgabe, dass die Anteile der polymeren Zusammensetzung so gewählt sind, dass sie in Summe 100 Gew.-% ergeben.

Weiter bevorzugt umfasst oder besteht eine erfindungsgemäße polymere Zusammensetzung und/oder eine erfindungsgemäß zu verwendende polymere Zusammensetzung aus:
a) wenigstens einem elastomeren, ersten Polymer mit einem Schmelzpunkt von unter 100°C, das vorzugsweise wenigstens ein Ethylen-Butylacrylat-Copolymer (EBA) mit einem Butylacrylat-Anteil von 15 Gew.-% bis 30 Gew.-%, vorzugsweise von 17 Gew.-% - 29 Gew.-%, jeweils bezogen auf die eingesetzte Menge an Ethylen-Butylacrylat-Copolymer, umfasst oder daraus besteht, vorzugsweise in einem Anteil von 12 Gew.-% bis 35 Gew.-%, vorzugsweise von 15 Gew.-% bis 31 Gew.-%, weiter bevorzugt von 19 Gew.-% bis 29 Gew.-%, weiter bevorzugt von 22 Gew.-% bis 27 Gew.-%, jeweils bezogen auf das Gesamtgewicht der polymeren Zusammensetzung, und
b) wenigstens einem elastomeren, unpolaren zweiten Polymer mit einem Schmelzpunkt aus einem Bereich von 100°C bis 180°C, das vorzugsweise wenigstens ein High Density Polyethylen (HDPE) umfasst oder daraus besteht, vorzugsweise in einem Anteil von 15 Gew.-% bis 40 Gew.-%, vorzugsweise von 19 Gew.-% bis 35 Gew.-%, weiter bevorzugt von 23 Gew.-% bis 32 Gew.-%, weiter bevorzugt von 25 Gew.-% bis 30 Gew.-%, jeweils bezogen auf das Gesamtgewicht der polymeren Zusammensetzung,
c) optional, wenigstens einem anorganischen Füll- oder Verstärkungsstoff, der vorzugsweise Kreide, Talkum, Glimmer, Kaolin, Glaskugeln, Glasfasern, Basaltfasern, Bariumsulfat und Mischungen davon umfasst oder daraus besteht, vorzugsweise in einem Anteil aus einem Bereich von 19 Gew.-% bis 51 Gew.-%, vorzugsweise von 23 Gew.-% bis 49 Gew.-%, weiter bevorzugt von 29 Gew.-% bis 47 Gew.-%, weiter bevorzugt von 36 Gew.-% bis 44 Gew.-%, weiter bevorzugt von 30 Gew.-% bis 40 Gew.-%, jeweils bezogen auf das Gesamtgewicht der polymeren Zusammensetzung, und
d) optional, wenigstens einem Additiv, das weiter bevorzugt ausgewählt ist aus Haftmittel, Antioxidationsmittel, UV-Absorber und/oder Farbmittel, vorzugsweise in einem Anteil aus dem Bereich von bis zu 5 Gew-%, bevorzugt von bis zu 3 Gew.-%, weiter bevorzugt von bis zu 2 Gew.-%, jeweils bezogen auf das Gesamtgewicht der polymeren Zusammensetzung,
mit der Maßgabe, dass die Anteile der polymeren Zusammensetzung so gewählt sind, dass sie in Summe 100 Gew.-% ergeben.

Vorzugsweise wird eine erfindungsgemäße polymere Zusammensetzung und/oder eine erfindungsgemäß zu verwendende polymere Zusammensetzung hergestellt, indem die jeweiligen Komponenten, insbesondere zumindest das (i) wenigstens eine elastomere, erste Polymer mit einem Schmelzpunkt von unter 100°C, vorzugsweise von 99°C oder weniger, weiter bevorzugt 98°C oder weniger, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und das (ii) wenigstens eine elastomere, unpolare, zweite Polymer mit einem Schmelzpunkt aus einem Bereich von 100°C bis 180°C, vorzugsweise von 101°C bis 179°C, weiter bevorzugt von 102°C bis 178°C, das aus der Gruppe, die aus Polyethylen, Polypropylen, Copolymere von Polyethylen und Polypropylen sowie Mischungen davon besteht, sowie, optional, das (iii) wenigstens eine elastomere, dritte Polymer, das wenigstens ein styrolisches Blockcopolymer umfasst oder ist, jeweils in einer festen Darreichungsform, die ausgewählt ist aus der Gruppe, die aus Granulat, bevorzugt Zylindergranulat, Würfelgranulat, Zylindergranulat, Linsengranulat oder Splittergranulat, Pulver, Gries, Pellet, Draht, Filament und Kombinationen davon besteht, bereitgestellt und vermengt werden. Das Vermengen des ersten und zweiten Polymers sowie optional dritten Polymers kann mittels Extruder, insbesondere Doppelschneckenextruder, Kneter, insbesondere Walzenkneter, statischen Mischer, dynamischen Mischer, Spritzgussmaschine, oder Kombinationen davon, erfolgen.

Weiter bevorzugt kann nach dem Vermengen der jeweiligen Komponenten optional weiterhin wenigstens ein Fertigungsverfahren, insbesondere ein Umformverfahren, Trennverfahren, und/oder Beschichtungsverfahren, durchgeführt werden. Hierdurch kann die Darreichungsform der erfindungsgemäßen und/oder erfindungsgemäß zu verwendenden polymeren Zusammensetzung an die angedachte Verwendung angepasst und optimiert werden.

Bei einer bevorzugten Ausführungsform liegt eine erfindungsgemäße und/oder erfindungsgemäßen zu verwendende polymere Zusammensetzung in einer Darreichungsform vor, die aus der Gruppe, die aus Pulver, Gries, Krümel, Pellet, Granulat, Draht, Filament und Kombinationen davon, besteht, ausgewählt wird. Das Granulat kann als Zylindergranulat, Würfelgranulat, Zylindergranulat, Linsengranulat oder Splittergranulat vorliegen.

Vorzugsweise erfolgt das Auftragen des wenigstens einen Stützmaterials, das wenigstens eine erfindungsgemäße und/oder erfindungsgemäß zu verwendende polymere Zusammensetzung umfasst oder daraus besteht, in Schritt a2) durch zunächst zumindest teilweises Erweichen des Stützmaterials nach Einwirken von thermischer Energie, vorzugsweise bei einer Temperatur aus einem Bereich von 75 °C bis 120 °C, weiter bevorzugt aus einem Bereich von 90 °C bis 110 °C, und nachfolgenden Auftragen des zumindest teilweise erweichten, vorzugsweise zumindest fließfähigen oder plastisch verformbaren, Stützmaterials.

Vorzugsweise kann das in Schritt a2) verwendete wenigstens eine Stützmaterial, vorzugsweise erfindungsgemäße und/oder erfindungsgemäß zu verwendende polymere Zusammensetzung, jeweils unabhängig voneinander partikulär, vorzugsweise als Pulver, Gries, Krümel, oder Granulat, und/oder fadenartig, vorzugsweise als Filament und/oder Draht, vorliegen.

Weiter bevorzugt erfolgt bei Verwendung wenigstens eines partikulären Stützmaterials, das wenigstens eine erfindungsgemäße und/oder erfindungsgemäß zu verwendende polymere Zusammensetzung umfasst oder daraus besteht, vor und/oder während Schritt a2) des erfindungsgemäßen Verfahrens zusätzlich eine Plastifizierung des partikulären Stützmaterials, wobei weiter bevorzugt ein homogenes, zumindest fließfähiges oder plastisch verformbares Stützmaterial erhalten wird, das nachfolgend in Schritt a2) aufgetragen werden kann. Weiter bevorzugt kann das Plastifizieren eines partikulären Stützmaterials, das wenigstens eine erfindungsgemäße und/oder erfindungsgemäß zu verwendende polymere Zusammensetzung umfasst oder daraus besteht, unter Verwendung wenigstens einer aus dem Stand der Technik bekannten Plastifizierungseinheit, beispielsweise in Form einer Schnecke, weiter bevorzugt unter Einwirken von thermischer Energie, vorzugsweise bei einer Temperatur aus einem Bereich von 75 °C bis 120 °C, weiter bevorzugt aus einem Bereich von 90 °C bis 110 °C, erfolgen.

Bei Verwendung eines fadenförmigen Stützmaterials, das wenigstens eine erfindungsgemäße und/oder erfindungsgemäß zu verwendende polymere Zusammensetzung umfasst oder daraus besteht und das weiter bevorzugt als Filament und/der Draht vorliegt, kann auf die Verwendung einer zusätzlichen Plastifizierungseinheit, beispielsweise in Form einer Schnecke, verzichtet werden.

Weiter bevorzugt erfolgt das Auftragen des wenigstens einen Stützmaterials, das wenigstens eine erfindungsgemäße und/oder erfindungsgemäß zu verwendende polymere Zusammensetzung umfasst oder daraus besteht, in Schritt a2) des erfindungsgemäßen Verfahrens durch ein, vorzugsweise kontinuierliches, Extrudieren des zumindest teilweise erweichten, vorzugsweise zumindest fließfähigen oder plastisch verformbaren, Stützmaterials, durch eine, vorzugsweise formgebende, Öffnung, die auch als Düse bezeichnet werden kann.

Eine geeignete, vorzugsweise formgebende, Öffnung, kann vorzugsweise Bestandteil wenigstens einer Vorrichtung sein, die zum Auftragen einer zumindest teilweise erweichten, vorzugsweise zumindest fließfähigen oder plastisch verformbaren, polymeren Masse, vorzugsweise erfindungsgemäße und/oder erfindungsgemäß zu verwendende polymere Zusammensetzung, konfiguriert und geeignet ist.

Eine geeignete Vorrichtung zum Auftragen des wenigstens einen Stützmaterials, das wenigstens eine erfindungsgemäße und/oder erfindungsgemäß zu verwendende polymere Zusammensetzung umfasst oder daraus besteht, in Schritt a2) des erfindungsgemäßen Verfahrens ist im Stand der Technik bekannt und kann beispielsweise in Form eines Druckkopfes eines additive Fertigungssystems bereitgestellt werden.

Weiter bevorzugt umfasst eine geeignete Vorrichtung zum Auftragen des wenigstens einen Stützmaterials, das wenigstens eine erfindungsgemäße und/oder erfindungsgemäß zu verwendende polymere Zusammensetzung umfasst oder daraus besteht, in Schritt a2) des erfindungsgemäßen Verfahrens, vorzugsweise Druckkopf eines additive Fertigungssystems, neben wenigstens einer geeigneten, vorzugsweise formgebenden, Öffnung, die zum Auftragen des wenigstens einen Stützmaterials konfiguriert und geeignet ist, weiterhin auch eine Vorrichtung zur Bereitstellung von thermischer Energie, vorzugsweise einer Temperatur aus einem Bereich von 75 °C bis 120 °C, weiter bevorzugt aus einem Bereich von 90 °C bis 110 °C, um ein zumindest teilweises Erweichen des Stützmaterials, das wenigstens eine erfindungsgemäße und/oder erfindungsgemäß zu verwendende polymere Zusammensetzung umfasst oder daraus besteht, zu ermöglichen.

Weiter bevorzugt umfasst eine geeignete Vorrichtung zum Auftragen des wenigstens einen Stützmaterials in Schritt a2) des erfindungsgemäßen Verfahrens, vorzugsweise Druckkopf eines additive Fertigungssystems, weiterhin auch eine Vorrichtung zum, vorzugsweise kontinuierlichen, Transport des zumindest teilweise erweichten, vorzugsweise zumindest fließfähigen oder plastisch verformbaren, Stützmaterials durch wenigstens eine, vorzugsweise formgebende, Öffnung der Vorrichtung.

Eine geeignete Vorrichtung zum Auftragen des wenigstens einen Stützmaterials in Schritt a2) des erfindungsgemäßen Verfahrens, vorzugsweise Druckkopf eines additive Fertigungssystems, umfasst vorzugsweise weiterhin auch eine Vorrichtung zum Speichern des Stützmaterials, beispielsweise in Form eines Behälters, der zur Aufnahme und Lagerung von partikulärem Stützmaterial geeignet ist, oder in Form einer Spule, die zur Aufnahme und Lagerung von fadenartigem Stützmaterial geeignet ist.

Nach oder während des schichtweisen Auftragens des zumindest teilweise erweichten, vorzugsweise zumindest fließfähigen oder plastisch verformbaren, Stützmaterials, das wenigstens eine erfindungsgemäße und/oder erfindungsgemäß zu verwendende polymere Zusammensetzung umfasst oder daraus besteht, erfolgt vorzugsweise ein Aushärten des wenigstens einen Stützmaterials unter Erhalt einer zumindest in Teilbereichen ausgehärteten Schicht. Anschließend kann auf die zumindest in Teilbereichen ausgehärteten Schicht wenigstens eine weitere Schicht des verwendeten Stützmaterials, das wenigstens eine erfindungsgemäße und/oder erfindungsgemäß zu verwendende polymere Zusammensetzung umfasst oder daraus besteht, und/oder wenigstens eine Schicht des Modellmaterials in analoger Weise aufgebracht werden.

Das Aushärten des verwendeten Stützmaterials, das wenigstens eine erfindungsgemäße und/oder erfindungsgemäß zu verwendende polymere Zusammensetzung umfasst oder daraus besteht, erfolgt vorzugsweise durch Abkühlen des verwendeten Stützmaterials, weiter bevorzugt auf Raumtemperatur.

In einer bevorzugten Ausführungsform des erfindungsgemäßen Verfahrens erfolgt das sequenzielle Auftragen und Verfestigen von wenigstens einer ersten Schicht aus wenigstens einem Modellmaterial in Schritt a1) und/oder das sequenzielle Auftragen und Verfestigen von wenigstens einer zweiten Schicht aus wenigstens einem Stützmaterial, das wenigstens eine erfindungsgemäße und/oder erfindungsgemäß zu verwendende polymere Zusammensetzung umfasst oder daraus besteht, in Schritt a2) auf wenigstens eine, vorzugsweise ebene, Oberfläche wenigstens eines Trägers, die weiter bevorzugt so konfiguriert und ausgestaltet ist, das eine ausreichende Haftung wenigstens einer ersten Schicht aus wenigstens einem Modellmaterial und/oder wenigstens einer zweiten Schicht aus wenigstens einem Stützmaterial, das wenigstens eine erfindungsgemäße und/oder erfindungsgemäß zu verwendende polymere Zusammensetzung umfasst oder daraus besteht, gewährleistet ist.

Auf der wenigsten einen, vorzugsweise ebenen, Oberfläche wenigstens eines Trägers, der beispielsweise in Form eines Druckbettes oder Druckplattform bereitgestellt werden kann, erfolgt in Schritt a1) des erfindungsgemäßen Verfahrens ein Anordnen von wenigstens einer ersten Schicht aus wenigstens einem Modellmaterial in einem konfigurierten ersten Muster unter Erhalt einer Modellstruktur, die dem dreidimensionalen Objekt entspricht, und/oder in Schritt a2) des erfindungsgemäßen Verfahrens ein Anordnen von wenigstens einer zweiten Schicht aus wenigstens einem Stützmaterial, das wenigstens eine erfindungsgemäße und/oder erfindungsgemäß zu verwendende polymere Zusammensetzung umfasst oder daraus besteht, in einem konfigurierten zweiten Muster unter Erhalt wenigstens einer Stützstruktur.

Wenigstens eine, vorzugsweise ebenen, Oberfläche wenigstens eines Trägers kann vorzugsweise in Schritt a0) des erfindungsgemäßen Verfahrens bereitgestellt werden.

Nach Bereitstellen wenigstens einer, vorzugsweise ebenen, Oberfläche wenigstens eines Trägers in Schritt a0) erfolgt vorzugsweise in Schritt a1) ein sequenzielles Auftragen und Verfestigen von wenigstens einer ersten Schicht aus wenigstens einem Modellmaterial, wobei die wenigstens eine erste Schicht in einem konfigurierten ersten Muster angeordnet wird unter Erhalt einer Modellstruktur, die dem dreidimensionalen Objekt entspricht, und/oder in Schritt a2) ein sequenzielles Auftragen und Verfestigen von wenigstens einer zweiten Schicht aus wenigstens einem Stützmaterial, wobei die wenigstens eine zweite Schicht in einem konfigurierten zweiten Muster angeordnet wird unter Erhalt wenigstens einer Stützstruktur, wobei die Modellstruktur und die wenigstens eine Stützstruktur zumindest in einem Teilbereich der Oberfläche lösbar miteinander in Kontakt stehen, und wobei das wenigstens eine Stützmaterial wenigstens eine erfindungsgemäße und/oder erfindungsgemäß zu verwendende polymere Zusammensetzung umfasst oder daraus besteht.

Geeignete Druckbetten oder Druckplattformen, die im erfindungsgemäßen Verfahren verwendet werden können, sind im Stand der Technik bekannt und können, vorzugsweise als Teil eines 3D-Druck Systems, beispielsweise bei der Firma Stratasys, Ltd. (Eden Prairie, MN**,** US), kommerziell erworben werden.

Weiter bevorzugt kann die in Schritt a0) bereitgestellte wenigstens eine, vorzugsweise ebene, Oberfläche wenigstens eines Trägers nach Schritt a1) und Schritt a2) und vor, während oder nach Schritt b) oder c) oder nach Schritt c) entfernt werden.

Im erfindungsgemäßen Verfahren kann das sequenzielle Auftragen und Verfestigen der wenigstens einen zweiten Schicht aus wenigstens einem Stützmaterial, das wenigstens eine erfindungsgemäße und/oder erfindungsgemäß zu verwendende polymere Zusammensetzung umfasst oder daraus besteht, in Schritt a2) vorzugsweise vor, während und/oder nach Schritt a1) erfolgen.

Beispielsweise kann zunächst wenigstens eine Stützstruktur bereitgestellt werden, in dem zunächst in Schritt a2) wenigstens eine zweite Schicht aus wenigstens einem Stützmaterial, das wenigstens eine erfindungsgemäße und/oder erfindungsgemäß zu verwendende polymere Zusammensetzung umfasst oder daraus besteht, aufgetragen und verfestigt wird, weiter bevorzugt auf wenigstens einer, vorzugsweise ebenen, Oberfläche des wenigstens einen Trägers, wobei die wenigstens eine zweite Schicht in einem konfigurierten zweiten Muster angeordnet wird unter Erhalt wenigstens einer Stützstruktur. Auf zumindest einem Teilbereich der Oberfläche der wenigstens einen Stützstruktur kann nachfolgend in Schritt a1) wenigstens eine erste Schicht aus wenigstens einem Modellmaterial aufgetragen und verfestigt werden, wobei die wenigstens eine erste Schicht in einem konfigurierten ersten Muster angeordnet wird unter Erhalt einer Modellstruktur, wobei die Modellstruktur und die wenigstens eine Stützstruktur vorzugsweise zumindest in einem Teilbereich der Oberfläche lösbar miteinander in Kontakt stehen.

Alternativ kann zunächst wenigstens eine Modelstruktur bereitgestellt werden, in dem zunächst in Schritt a1) wenigstens eine erste Schicht aus wenigstens einem Modellmaterial aufgetragen und verfestigt wird, weiter bevorzugt auf wenigstens einer, vorzugsweise ebenen, Oberfläche des wenigstens einen Trägers, wobei die wenigstens eine erste Schicht in einem konfigurierten ersten Muster angeordnet wird unter Erhalt wenigstens einer Modelstruktur. Auf zumindest einem Teilbereich der Oberfläche der wenigstens einen Modelstruktur kann nachfolgend in Schritt a2) wenigstens eine zweite Schicht aus wenigstens einem Stützmaterial aufgetragen und verfestigt werden, wobei die wenigstens eine zweite Schicht in einem konfigurierten zweiten Muster angeordnet wird unter Erhalt einer Stützstruktur, wobei die Modellstruktur und die wenigstens eine Stützstruktur vorzugsweise zumindest in einem Teilbereich der Oberfläche lösbar miteinander in Kontakt stehen.

Es ist auch möglich, dass Schritt a1) und Schritt a2) gleichzeitig durchgeführt werden, in dem vorzugweise zunächst in Schritt a1) wenigstens eine erste Schicht aus wenigstens einem Modellmaterial aufgetragen und verfestigt wird, weiter bevorzugt auf wenigstens einem ersten Teilbereich der, vorzugsweise ebenen, Oberfläche des wenigstens einen Trägers, wobei die wenigstens eine erste Schicht in einem konfigurierten ersten Muster angeordnet wird unter Erhalt wenigstens einer Modelstruktur. Auf wenigstens einem zweiten Teilbereich der, vorzugsweise ebenen, Oberfläche des wenigstens einen Trägers kann gleichzeitig in Schritt a2) wenigstens eine zweite Schicht aus wenigstens einem Stützmaterial aufgetragen und verfestigt werden, wobei die wenigstens eine zweite Schicht in einem konfigurierten zweiten Muster angeordnet wird unter Erhalt einer Stützstruktur und wobei die Modellstruktur und die wenigstens eine Stützstruktur zumindest in einem Teilbereich der Oberfläche lösbar miteinander in Kontakt stehen.

In einer weiter bevorzugten Ausführungsform kann das sequenzielle Auftragen und Verfestigen der wenigstens einen zweiten Schicht aus wenigstens einem Stützmaterials, das wenigstens eine erfindungsgemäße und/oder erfindungsgemäß zu verwendende polymere Zusammensetzung umfasst oder daraus besteht, in Schritt a2) gleichzeitig oder getrennt mit dem sequenziellen Auftragen und Verfestigen von wenigstens einer ersten Schicht aus wenigstens einem Modellmaterial in Schritt a1) erfolgen, wobei vorzugsweise das sequenzielle Auftragen und Verfestigen der wenigstens einen ersten Schicht aus wenigstens einem Modellmaterials in Schritt a1) durch eine, vorzugsweise formgebende, erste Öffnung und das sequenzielle Auftragen und Verfestigen der wenigstens einen zweiten Schicht aus wenigstens einem Stützmaterials in Schritt a2) durch eine, vorzugsweise formgebende, zweite Öffnung erfolgen kann. Weiter bevorzugt kann die, vorzugsweise formgebende, erste Öffnung und die, vorzugsweise formgebende, zweite Öffnung Bestandteil wenigstens einer gemeinsamen Vorrichtung oder getrennten Vorrichtung sein, die jeweils zum Auftragen einer zumindest teilweise erweichten, vorzugsweise zumindest fließfähigen oder plastisch verformbaren, polymeren Masse konfiguriert und geeignet ist.

Eine geeignete Vorrichtung zum gemeinsamen Auftragen des wenigstens einen Modellmaterials in Schritt a1) und des wenigstens einen Stützmaterials, das wenigstens eine erfindungsgemäße und/oder erfindungsgemäß zu verwendende polymere Zusammensetzung umfasst oder daraus besteht, in Schritt a2) des erfindungsgemäßen Verfahrens sind ebenfalls im Stand der Technik bekannt und können beispielsweise in Form eines kombinierten Druckkopfes oder mehrerer Druckköpfe eines additive Fertigungssystems bereitgestellt werden.

Die Schritte a1) und/oder a2) des erfindungsgemäßen Verfahrens können vorzugsweise beliebig oft und in beliebiger Reihenfolge wiederholt werden, vorzugsweise bis zum Erhalt der herzustellenden Modellstruktur des dreidimensionalen Objektes, die weiterhin wenigstens eine Stützstruktur aufweist, die mit der Modellstruktur zumindest in einem Teilbereich der Oberfläche lösbar in Kontakt steht und bestimmte Teilbereiche der Oberfläche der Modellstruktur vorübergehend stützt und/oder eine angemessene vertikale Platzierung wenigstens einer nachfolgenden Schicht der Modellstruktur gewährleistet hat.

Um die endgültige Form des hergestellten dreidimensionalen, weiter bevorzugt formstabilen, Objektes freizulegen, wird vorzugsweise die wenigstens eine Stützstruktur nachfolgend entfernt. Im erfindungsgemäßen Verfahren wird die wenigstens eine Stützstruktur von der hergestellten Modelstruktur vorzugsweise nach den Schritten a1) und a2) durch sequenzielles Durchführen der Schritte b) und c) entfernt, wobei beim Entfernen der wenigstens einen Stützstruktur von der Modellstruktur, vorzugsweise nach Schritt a1) und Schritt a2) und vor, während und/oder nach den Schritten b) und/oder c), weiter bevorzugt nach Schritt a1) und Schritt a2) und vor, während und/oder nach Schritt b) und/oder nach Schritt c), kein Lösungsmittel verwendet wird, vorzugsweise kein organisches Lösungsmittel und/oder kein anorganisches Lösungsmittel, insbesondere kein Wasser.

Weiter bevorzugt wird weiterhin im erfindungsgemäßen Verfahren beim Entfernen der wenigstens einen Stützstruktur von der Modellstruktur, vorzugsweise nach Schritt a1) und Schritt a2) und vor, während und/oder nach den Schritten b) und/oder c), weiter bevorzugt nach Schritt a1) und Schritt a2) und vor, während und/oder nach Schritt b) und/oder nach Schritt c), keine Säure, d.h. keine Verbindung, die als Protonen-abgebende Verbindung, Brønsted-Säure, oder Protonendonator bezeichnet werden kann, keine Base, d.h. keine Verbindung, die als Protonen-aufnehmende Verbindung, Brønsted-Base, oder Protonenakzeptor bezeichnet werden kann, und keine Kombinationen davon und keine Mischungen davon verwendet.

Entsprechende Säuren und Basen sind dem Fachmann bekannt und umfassen vorzugsweise organische Säuren, organische Basen, anorganische Säuren, anorganische Basen, Anhydride davon und Mischungen davon.

In Schritt b) des erfindungsgemäßen Verfahrens erfolgt ein Beaufschlagen der wenigstens einen Stützstruktur mit thermischer Energie, vorzugsweise bei einer Temperatur aus einem Bereich von 55°C bis 135°C unter Erhalt einer zumindest in Teilbereichen erweichten, vorzugsweise vollständig erweichten, Stützstruktur.

Vorzugsweise erfolgt das Beaufschlagen der wenigstens einen Stützstruktur in Schritt b) bei einer Temperatur aus einem Bereich von 55°C bis 135°C, vorzugsweise von 60 °C bis 130°C, vorzugsweise von 70°C bis 125°C, vorzugsweise von 80°C bis 120°C, vorzugsweise von 85°C bis 110 °C, und vorzugsweise für einen Zeitraum von bis mindestens 5 Minuten, vorzugsweise für einen Zeitraum von wenigstens 5 Minuten bis höchstens 60 Minuten.

Schritt b) des erfindungsgemäßen Verfahrens kann beispielsweise durch Beaufschlagen der gesamten Modelstruktur und der wenigstens einen Stützstruktur, die zumindest in einem Teilbereich der Oberfläche lösbar mit der Modelstruktur in Kontakt steht, erfolgen, oder, alternativ, durch ein lokales Beaufschlagen der wenigstens einen Stützstruktur, vorzugsweise wenigstens einer Oberfläche der wenigstens einen Stutzstruktur.

Ein Beaufschlagen zumindest der wenigstens einen Stützstruktur mit thermischer Energie bei einer Temperatur aus einem Bereich von 55°C bis 135°C, vorzugsweise von 60 °C bis 130°C, vorzugsweise von 70°C bis 125°C, vorzugsweise von 80°C bis 120°C, vorzugsweise von 85 °C bis 110 °C, in Schritt b) des erfindungsgemäßen Verfahrens kann mit einer dem Fachmann bekannten Vorrichtung zur Erzeugung von Wärme, beispielsweise unter Verwendung von Heißluft, elektromagnetischer Strahlung und/oder direktem Kontakt zu einem erwärmten Medium, erfolgen.

Die zumindest in Teilbereichen erweichte, vorzugsweise vollständig erweichte, Stützstruktur kann sich vorzugsweise bei Zug- und/oder Druckbelastung elastisch verformen.

In Schritt c) des erfindungsgemäßen Verfahrens erfolgt ein Abziehen der wenigstens einen zumindest in Teilbereichen erweichten Stützstruktur von der Modellstruktur unter Erhalt des dreidimensionalen, weiter bevorzugt formstabilen, Objektes, vorzugsweise durch Anwendung einer Zug- und/oder Druckbelastung.

Das Abziehen der wenigstens einen zumindest in Teilbereichen erweichten Stützstruktur von der Modellstruktur in Schritt c) kann vorzugsweise unter Verwendung eines geeigneten Werkzeuges, vorzugsweise Greifwerkzeuges, weiter bevorzugt Zange, Pinzette, oder Greifer, oder per Hand erfolgen.

Weiter bevorzugt erfolgt das Abziehen der wenigstens einen zumindest in Teilbereichen erweichten Stützstruktur von der Modellstruktur ohne das auf der Modelstruktur, insbesondere dem Teilbereich der Oberfläche der Modellstruktur, der mit der wenigstens einen Stützstruktur lösbar in Kontakt stand, Reste des zur Herstellung der wenigstens einen Stützstruktur verwendeten Stützmaterials verbleiben. Daher sind im erfindungsgemäßen Verfahren vorzugsweise weitere Schritte zur, vorzugsweise vollständigen, Entfernung der wenigstens einen Stützstruktur nicht erforderlich.

Eine erfindungsgemäße polymere Zusammensetzung wird in einem Verfahren zur additiven Herstellung eines dreidimensionalen, weiter bevorzugt formstabilen, Objektes verwendet, wobei die polymere Zusammensetzung als Stützmaterial verwendet wird.

Geeignete Verfahren zur additiven Herstellung eines dreidimensionalen, weiter bevorzugt formstabilen, Objektes sind dem Fachmann bekannt und umfassen vorzugsweise Materialextrusionsverfahren, wie weiter bevorzugt Fused Granular Fabrication (FGF), Solid Freeform Fabrication (SFF), Big Area Additive Manufacturing (BAAM), Large Area Additive Manufacturing (LAAM), Fused Layer Modelling (FLM), Fused Deposition Modeling (FDM), Fused Deposition Modeling Large (FDML), Screw Extrusion Additive Manufacturing (SEAM), Variable Freeform Granulat Fabrication (VFGF) oder Fused Filament Fabrication (FFF).

Materialextrusion ist vorzugsweise eine dem Fachmann bekannte Kategorie an additiven Fertigungsverfahren gemäß der Norm ISO/ASTM 52900:2021-11 (".Additive manufacturing - General principles - Fundamentals and vocabulary", Ausgabedatum: 2021-11).

Im Folgenden wird die Erfindung anhand von Ausführungsbeispielen unter Zuhilfenahme der beiliegenden Figuren beispielhaft erläutert. Die gezeigten Ausführungsbeispiele und Figuren sind nur beispielhaft und daher nicht einschränkend zu verstehen.

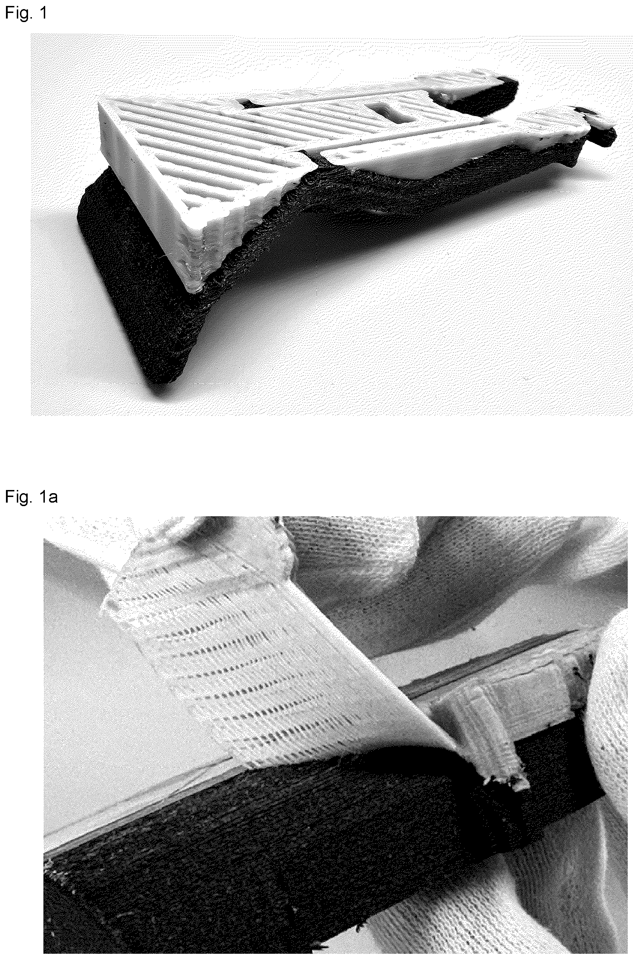

Fig. 1 zeigt den in Beispiel 1 hergestellten Hebel aus einem Modellmaterial mit einer flächig anliegenden Stützstruktur nach dem Ablösen des Druckbettes. Fig. 1a zeigen das leichte Entfernen der flächigen Stützstruktur von dem in Beispiel 1 hergestellten Hebel nach Erwärmung, hier auf 100°C.

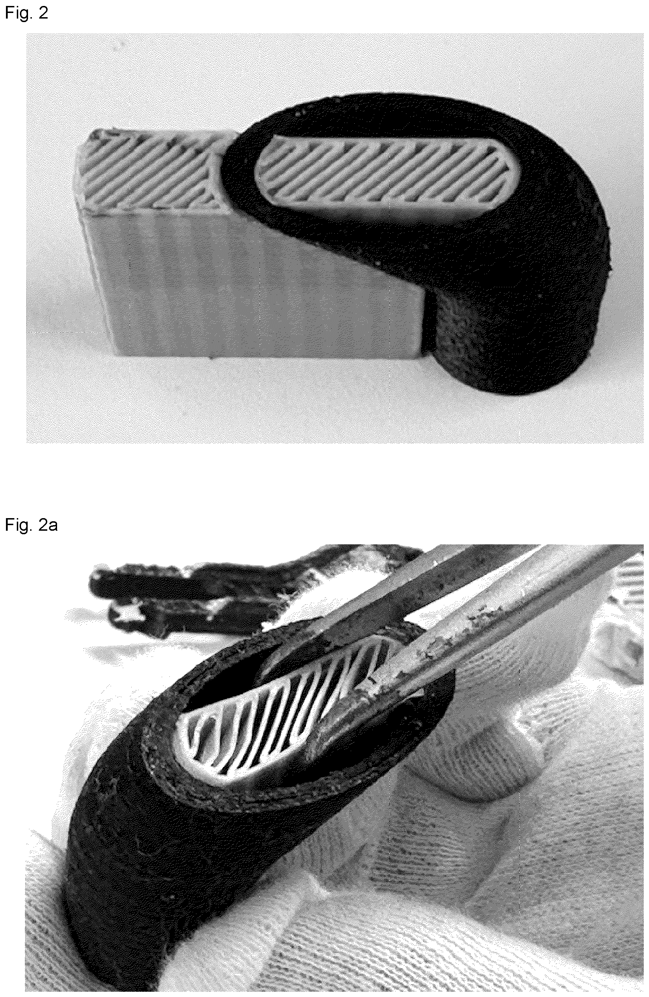

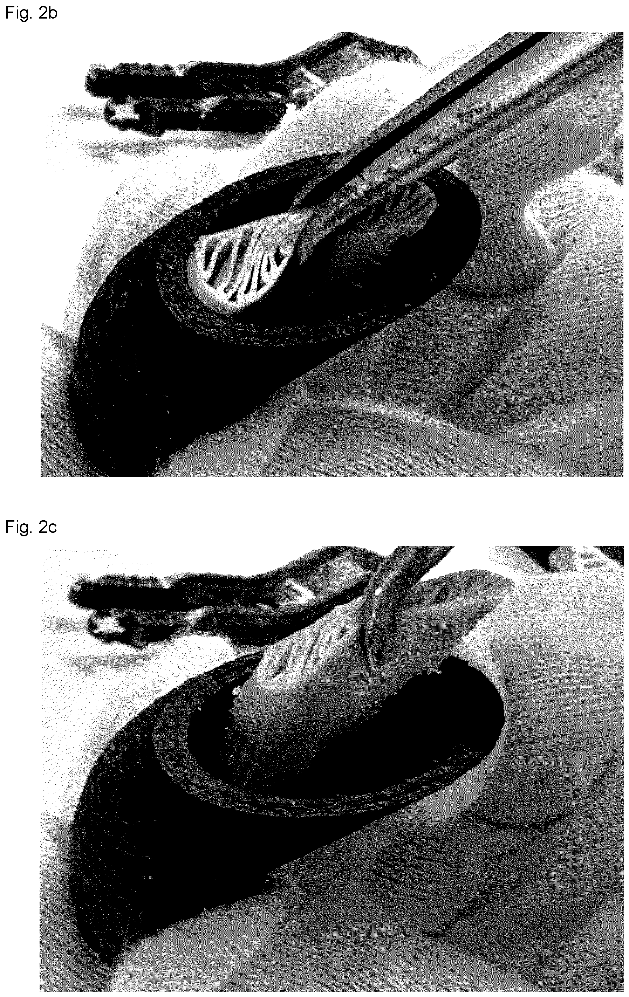

Fig. 2 zeigt den in Beispiel 1 hergestellten Rohrkrümmer mit einer außen angeordneten Stützstruktur und einer weiteren, insbesondere der Modellstruktur angeordneten Stützstruktur aus dem oben angegebenen Stützmaterial nach dem Ablösen des Druckbettes. Die Fig. 2a bis 2c zeigen das leichte Entfernen der inliegenden Stützstruktur von dem in Beispiel 1 hergestellten Rohrkrümmer nach Erwärmung, hier auf 100°C, unter Verwendung einer Zange.

### Beispiel 1:

Falls nichts anderes angegeben ist, wurde in dem nachfolgenden Beispiel die jeweiligen Polymere und Chemikalien von folgenden Herstellern kommerziell erworben: Ducor Petrochemicals B.V. (Rozenburg, NL), LyondellBasell Industries Holdings, B.V. (Rotterdam, NL), Arakawa Europe GmbH (Eschborn, DE), Merck KGaA (Darmstadt, DE), TSRC Corporation (Kaohsiung City, TW), LUCOBIT AG (Wesseling, DE), BASF SE (Ludwigshafen, DE).

Dabei wurden folgende polymere Zusammensetzungen verwendet:

### Modellmaterial: (Produkt-ID 1549, DIPRO^{®}blend H):

| | |
|---|---|
| 47,5 Gew.-% bis 52,5 Gew.-% | Polypropylen-Homopolymer (PPH): |
| | DuPure^{®} R 76 (Ducor) |
| 7,1 Gew.-% bis 7,9 Gew.-% | Linear Low Density Polyethylen (LLDPE): |
| | Lupolen^{®} 3621 M RM (LyondellBasell) |
| 11,4 Gew.-% bis 12,6 Gew.-% | Styrol-Ethylen-Butylen-Styrol-Copolymer (SEBS): TAIPOL^{®} SEBS-6151 (TSRC) |
| 22,5 Gew.-% bis 27,5 Gew.-% | anorganischer Füll- oder Verstärkungsstoff: |
| | Glasfasern |
| 1,4 Gew.-% bis 1,7 Gew.-% | Haftmittel: |
| | HC-Resin ARKON^{®} P-140 (Arakawa) |
| 1,8 Gew.-% bis 2,1 Gew.-% | Verträglichkeitsvermittler: |
| | Polypropylen-Pfropf-maleinsäureanhydrid (PP/MAH) (Merck), sowie, |

optional, weitere geeignete Additive, wie beispielsweise Antioxidationsmittel, UV-Absorber und/oder Farbmittel, in einem Anteil bis höchstens 5 Gew.-%,
wobei die Bestandteile des Modellmaterials so gewählt werden, dass sie in Summe 100 Gew.-% ergeben.

### Stützmaterial, (Produkt-ID 2028, PX-DIPRO^{®}support 2/82B, mittlere Härte):

| | |
|---|---|
| 23,6 Gew.-% bis 26,0 Gew.-% | elastomeres, erstes Polymer: |
| | Ethylen-Butylacrylat-Copolymer (EBA) mit einem Butylacrylat-Anteil von 27 Gew.-%: |
| | Lucofin^{®}2400MN (LUCOBIT), (Schmelzpunkt gem. Herstellerangabe: 82°C) |
| 26,6 Gew.-% bis 29,5 Gew.-% | elastomeres, unpolares, zweites Polymer: |
| | High Density Polyethylen (HDPE): SABIC^{®} HDPE M1053 |
| | (Schmelzpunkt gem. Herstellerangabe: 132°C) |
| 36,0 Gew.-% bis 44,0 Gew.-% | anorganischer Füll- oder Verstärkungsstoff: |
| | Talkum - plättchenförmig |
| 1,9 Gew.-% bis 2,1 Gew.-% | Haftmittel: |
| | HC-Resin ARKON^{®} P-140 (Arakawa) |
| 0,05 Gew.-% bis 0,2 Gew.-% | Antioxidationsmittel: |
| | IRGANOX^{®} 1010 (BASF), |

optional, weitere geeignete Additive, wie beispielsweise, UV-Absorber und/oder Farbmittel, in einem Anteil bis höchstens 5 Gew.-%,
wobei die Bestandteile des Stützmaterials so gewählt werden, dass sie in Summe 100 Gew.-% ergeben.

Das verwendete Modelmaterial und das verwendete Stützmaterial lagen dabei entweder in Form eines Endlosfilaments mit einem mittleren Durchmesser von 1,5 mm oder als Granulat mit einem mittleren Partikeldurchmesser von 1,5 mm und einer mittleren Partikellänge aus einem Bereich von 2 mm bis 4 mm vor.Zur Herstellung des verwendeten Modellmaterials und Stützmaterials wurden die Einzelkomponenten gemäß der oben angegeben Zusammensetzung gemischt. Anschließend wurde die Mischung getrocknet, auf die gewünschte Breite von 1,5 mm extrudiert und auf eine Spule gewickelt. Zur Herstellung des jeweiligen Granulats wurden die entsprechenden Filamente nachfolgend zerkleinert und in entsprechende Behälter abgefüllt

Anschließend wurde zunächst ein Hebel aus dem oben abgegeben Modellmaterial mit einer flächig anliegenden Stützstruktur aus dem oben angegebenen Stützmaterial auf einem Druckbett unter Verwendung eines Granulatdruckverfahrens sowie ein Rohrkrümmer mit einer außen angeordneten Stützstruktur und einer weiteren innerhalb einer Vertiefung und/oder Kanal der Modellstruktur angeordneten Stützstruktur aus dem oben angegebenen Stützmaterial auf einem Druckbett unter Verwendung eines Filamentdruckverfahrens hergestellt.

Zur Herstellung des Hebels mit Hilfe des Granulatdruckverfahrens wurde ein TUMAKER^{®} BigFoot Pro 200 - Drucker der Firma Indart3D S. Coop. (Irun, ES) verwendet, der mit zwei unabhängigen Granulat-Druckköpfen, die jeweils eine Düse mit einem Durchmesser von 0,6 mm aufwiesen, ausgestattet war.

Fig. 1 zeigt den hergestellten Hebel aus dem oben abgegeben Modellmaterial mit einer flächig anliegenden Stützstruktur nach dem Ablösen des Druckbettes.

Zur Herstellung des Rohrkrümmers mit Hilfe des Filamentdruckverfahrens wurde ebenfalls ein TUMAKER^{®} BigFoot Pro 200 - Drucker verwendet, der mit zwei unabhängigen Filament-Druckköpfen, sog. Direct Drive HR Extrudern, die jeweils eine Düse mit einem Durchmesser von 0,4 mm aufwiesen, ausgestattet war.

Fig. 2 zeigt den hergestellten Rohrkrümmer mit außen und innen liegender Stützstruktur aus dem oben angegebenen Stützmaterial nach dem Ablösen des Druckbettes.

Der Druck erfolgte dabei unter Verwendung folgender Parameter:
Vortrocknung: nicht notwendig,
Massetemperatur: 230 - 260 °C für DIPRO^{®}blend H und PX-DIPRO^{®}support 2/82B
Bauplattentemperatur ca. 70 - 80 °C.

Es zeigte sich, dass die Haftung des verwendeten Stützmaterials an unpolaren und polaren Modellwerkstoffen gut ist und es daher während des Druckens beispielsweise zu keiner Schichtverschiebung beim Auftragen der Schichten kommt.

Nach Ablösen des Druckbettes von der hergestellten Modellstruktur, die weiterhin wenigstens eine Stützstruktur aufwies, erfolgte eine Erwärmung der hergestellten Modell- und Stützstruktur auf 100°C in einem Wärmeschrank für einen Zeitraum von 15 Minuten.

Danach konnte die jeweilige Stützstruktur sehr einfach von der Modellstruktur entfernt werden, beispielsweise unter Anwendung einer Zug- und/oder Druckbelastung.

Fig. 1a zeigen das leichte Entfernen der flächigen Stützstruktur von dem hergestellten Hebel nach Erwärmung, hier auf 100°C.

Die Fig. 2a bis 2c zeigen das leichte Entfernen der weiteren, innerhalb einer Vertiefung und/oder eines Kanals der Modellstruktur angeordneten Stützstruktur von dem hergestellten Rohrkrümmer nach Erwärmung, hier auf 100°C, unter Verwendung einer Zange.

Wie aus dem vorstehenden Beispiel ersichtlich ist, lässt sich eine mit einer erfindungsgemäßen polymeren Zusammensetzung und/oder einer erfindungsgemäßen zu verwendenden polymeren Zusammensetzung hergestellte Stützstruktur einfach von einer mit dem erfindungsgemäßen Verfahren hergestellten dreidimensionalen Modellstruktur, vorzugsweise zumindest von einem Teilbereich der Oberfläche der Modellstruktur, der mit der wenigstens einen Stützstruktur in Kontakt steht, entfernen, ohne dass Rückstände des Stützmaterials auf einem entsprechenden Teilbereich der Oberfläche der Modellstruktur verbleiben und/oder die Oberfläche der hergestellten Modellstruktur beim Entfernen der Stützstruktur beschädigt wird. Dabei kann insbesondere auch eine Stützstruktur, die zumindest in einem Teilbereich eines Hohlraums, einer Vertiefung, einer Bohrung, und/oder eines Kanals der Modelstruktur angeordnet ist, einfach und im Wesentlichen rückstandfrei im erfindungsgemäßen Verfahren entfernt werden.

Weiterhin kann die erfindungsgemäße polymere Zusammensetzung und/oder die erfindungsgemäß zu verwendende polymere Zusammensetzung in einer Vielzahl von additiven Herstellungsverfahren als Stützmaterial eingesetzt werden, vorzugsweise als partikuläres Stützmaterial, vorzugsweise als Pulver, Gries, Krümel, oder Granulat, und/oder als fadenartiges Stützmaterial, vorzugsweise Filament und/oder Draht.

## Patentansprüche

1. Verfahren zur additiven Herstellung eines dreidimensionalen Objektes, umfassend die Schritte:
a1) sequenzielles Auftragen und Verfestigen von wenigstens einer ersten Schicht aus wenigstens einem Modellmaterial, wobei die wenigstens eine erste Schicht in einem konfigurierten ersten Muster angeordnet wird unter Erhalt einer Modellstruktur, die dem dreidimensionalen Objekt entspricht, und wobei das wenigstens eine Modellmaterial ein thermoplastisches Polymer ist,
a2) sequenzielles Auftragen und Verfestigen von wenigstens einer zweiten Schicht aus wenigstens einem Stützmaterial, wobei die wenigstens eine zweite Schicht in einem konfigurierten zweiten Muster angeordnet wird unter Erhalt wenigstens einer Stützstruktur,
wobei die Modellstruktur und die wenigstens eine Stützstruktur zumindest in einem Teilbereich der Oberfläche lösbar miteinander in Kontakt stehen,
und wobei das wenigstens eine Stützmaterial wenigstens eine polymere Zusammensetzung umfasst oder daraus besteht, die:
(i) wenigstens ein elastomeres, erstes Polymer mit einem Schmelzpunkt von unter 100°C, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und
(ii) wenigstens ein elastomeres, unpolares, zweites Polymer mit einem Schmelzpunkt aus einem Bereich von 100°C bis 180°C, das aus der Gruppe, die aus Polyethylen, Polypropylen, Copolymere von Polyethylen und Polypropylen sowie Mischungen davon besteht, ausgewählt ist,
umfasst,
b) Beaufschlagen der wenigstens einen Stützstruktur mit thermischer Energie bei einer Temperatur aus einem Bereich von 55°C bis 135°C unter Erhalt einer zumindest in Teilbereichen erweichten Stützstruktur, und
c) Abziehen der wenigstens einen zumindest in Teilbereichen erweichten Stützstruktur von der Modellstruktur unter Erhalt des dreidimensionalen Objektes.

2. Verfahren nach Anspruch 1, wobei das Beaufschlagen der wenigstens einen Stützstruktur in Schritt b) bei einer Temperatur aus einem Bereich von 60 °C bis 130°C, vorzugsweise von 70°C bis 125°C, vorzugsweise von 80°C bis 120°C, vorzugsweise von 85 °C bis 110 °C, und vorzugsweise für einen Zeitraum von bis mindestens 5 Minuten, vorzugsweise für einen Zeitraum von wenigstens 5 Minuten bis höchstens 60 Minuten, erfolgt.

3. Verfahren nach einem der Ansprüche 1 oder 2, wobei das sequenzielle Auftragen des wenigstens einem Stützmaterials in Schritt a2) durch zumindest teilweises Erweichen des Stützmaterials nach Einwirken von thermischer Energie, vorzugsweise bei einer Temperatur aus einem Bereich von 85 °C bis 120 °C, weiter bevorzugt aus einem Bereich von 90 °C bis 110 °C, und nachfolgenden Auftragen des zumindest teilweise erweichten Stützmaterials erfolgt.

4. Verfahren nach einem der Ansprüche 1 bis 3, wobei das wenigstens eine Modellmaterial ein thermoplastisches Polymer umfasst, das aus der Gruppe, die aus Polypropylen (PP), Polyamid (PA), Acrylnitril-Butadien-Styrol-Copolymer (ABS), Acrylnitril-Styrol-Acrylat-Copolymer (ASA), Polyethylenterephthalat (PETG), Polylactid (PLA), thermoplastisches Polyurethan (TPU), Polystyrol (PS), Styrol-Acrylnitril-Copolymer (SAN), Alphamethylstyrol-Acrylnitril-Copolymer (AMSAN) und Mischungen davon besteht, ausgewählt wird, oder daraus besteht.

5. Verfahren nach einem der Ansprüche 1 bis 4, wobei das sequenzielle Auftragen des wenigstens einen Modellmaterials in Schritt a1) durch zumindest teilweises Erweichen des Modellmaterials nach Einwirken von thermischer Energie, vorzugsweise bei einer Temperatur aus einem Bereich von 75 °C bis 120 °C, weiter bevorzugt aus einem Bereich von 90 °C bis 110 °C, und nachfolgenden Auftragen des zumindest teilweise erweichten Modellmaterials erfolgt.

6. Verfahren nach einem der Ansprüche 1 bis 5, wobei das sequenzielle Auftragen und Verfestigen der wenigstens einen zweiten Schicht aus wenigstens einem Stützmaterial in Schritt a2) vor, während und/oder nach Schritt a1) erfolgt.

7. Polymere Zusammensetzung, umfassend:
(i) wenigstens ein elastomeres, erstes Polymer mit einem Schmelzpunkt von unter 100°C, das aus der Gruppe, die aus Polyolefin-Elastomeren, Ethylen-Vinylacetat-Copolymer, Ethylen-Butylacrylat-Copolymer, Ethylen-Ethylacrylat-Copolymer und Mischungen davon besteht, ausgewählt ist, und
(ii) wenigstens ein elastomeres, unpolares, zweites Polymer mit einem Schmelzpunkt aus einem Bereich von 100°C bis 180°C, das aus der Gruppe, die aus Polyethylen, Polypropylen, Copolymere von Polyethylen und Polypropylen sowie Mischungen davon besteht, ausgewählt ist.

8. Polymere Zusammensetzung nach Anspruch 7, wobei das wenigstens eine elastomere, unpolare, zweite Polymer mit einem Schmelzpunkt aus einem Bereich von 100°C bis 180°C aus der Gruppe, die aus Olefin-Block-Copolymer mit einer Dichte bei 23°C aus einem Bereich von 0,877 g/cm³ bis 0,90 g/cm³, vorzugsweise bestimmt gemäß dem in ASTM D792-20 angegeben Verfahren, und einem DSC-Schmelzpunkt aus einem Bereich von 105 bis 135°C, Linear-Low-Density-Polyethylen (LLDPE) mit DSC-Schmelzpunkt aus einem Bereich von 101°C bis 130°C, Low-Density-Polyethylen (LDPE) mit DSC-Schmelzpunkt aus einem Bereich von 101°C bis 115°C, Very-Low-Density-Polyethylen (VLDPE) mit DSC-Schmelzpunkt aus einem Bereich von 101°C bis 130°C, Medium-Density-Polyethylen (MDPE) mit DSC-Schmelzpunkt aus einem Bereich von 105°C bis 140°C, High-Density-Polyethylen (HDPE) mit DSC-Schmelzpunkt aus einem Bereich von 105°C bis 140°C, Polypropylen-Homopolymer (PPH) mit einem DSC-Schmelzpunkt aus einem Bereich von 140°C bis 180°C, Polypropylen-Ethylen-Copolymere (PP-Copolymer) mit einem DSC-Schmelzpunkt aus einem Bereich von 140°C bis 180°C und Mischungen davon besteht, ausgewählt ist.

9. Polymere Zusammensetzung nach einem der Ansprüche 7 oder 8, wobei das wenigstens eine elastomere, erste Polymer mit einem Schmelzpunkt von unter 100°C, aus der Gruppe, die aus Ethylen-Octen-Copolymeren mit einer Dichte bei 23°C aus einem Bereich von 0,850 g/cm³ bis 0,90 g/cm³, vorzugsweise bestimmt gemäß dem in ASTM D792-20 angegeben Verfahren, und einem DSC-Schmelzpunkt aus einem Bereich von 30°C bis 99°C, vorzugsweise von 37°C bis 85°C, Ethylen-Vinylacetat-Copolymer (EVA) mit einem Vinylacetat-Anteil von 5 Gew.-% bis 35 Gew.-% und einem DSC-Schmelzpunkt aus einem Bereich vom 75 °C bis 99 °C, Ethylen-Butylacrylat-Copolymer (EBA) mit einem Butylacrylat-Anteil von 15 Gew.-% bis 30 Gew.-% und einem DSC-Schmelzpunkt aus einem Bereich vom 75 °C bis 99 °C, Ethylen-Ethylacrylat-Copolymer (EEA) und Mischungen davon besteht, ausgewählt ist.

10. Polymere Zusammensetzung nach einem der Ansprüche 7 bis 9, wobei die polymere Zusammensetzung das wenigstens eine elastomere, erste Polymer mit einem Schmelzpunkt von unter 100°C in einem Anteil von 5 Gew.-% bis 70 Gew.-%, vorzugsweise von 10 Gew.-% bis 40 Gew.-%, jeweils bezogen auf das Gesamtgewicht der polymeren Zusammensetzung, und das wenigstens eine elastomere, unpolare zweite Polymer mit einem Schmelzpunkt aus einem Bereich von 100°C bis 180°C in einem Anteil von 10 Gew.-% bis 70 Gew.-%, vorzugsweise von 15 Gew.-% bis 60 Gew.-%, jeweils bezogen auf das Gesamtgewicht der polymeren Zusammensetzung, umfasst.

11. Polymere Zusammensetzung nach einem der Ansprüche 7 bis 10, wobei die Zusammensetzung weiterhin wenigstens ein elastomeres, drittes Polymer umfasst, das wenigstens ein styrolisches Blockcopolymer umfasst oder ist und vorzugsweise aus der Gruppe, die aus Styrol-Butadien Block Copolymere (SBC), Styrol-Butadien-Styrol-Copolymer (SBS), Styrol-Ethylen-Butylen-Styrol-Copolymer (SEBS), Styrol-Ethylen-Propylen-Styrol-Copolymer (SEPS), und Mischungen davon besteht, ausgewählt ist, wobei das Stützmaterial das wenigstens eine elastomere, dritte Polymer in einem Anteil von bis zu 50 Gew.-%, vorzugsweise in einem Anteil von 3 Gew.-% bis 50 Gew.-%, vorzugsweise von 5 Gew.-% bis 40 Gew.-%, jeweils bezogen auf das Gesamtgewicht der polymeren Zusammensetzung, umfasst.

12. Polymere Zusammensetzung nach einem der Ansprüche 7 bis 11, wobei die polymere Zusammensetzung weiterhin wenigstens einen anorganischen Füll- oder Verstärkungsstoff umfasst, der vorzugsweise aus der Gruppe, die aus Kreide, Talkum, Ruß, Glimmer, Kaolin, Wollastonit, Glaskugeln, Glasfasern, Basaltfasern, Kohlefasern, Bariumsulfat und Mischungen davon besteht, ausgewählt ist, wobei die polymere Zusammensetzung den wenigstens einen anorganischen Füll- oder Verstärkungsstoff in einem Anteil von bis zu 70 Gew.-%, vorzugsweise in einem Anteil von 0,5 Gew.-% bis 70 Gew.-%, vorzugsweise von 10 Gew.-% bis 50 Gew.-%, jeweils bezogen auf das Gesamtgewicht der polymeren Zusammensetzung, umfasst.

13. Polymere Zusammensetzung nach einem der Ansprüche 7 bis 12, wobei die polymere Zusammensetzung als Pulver, Gries, Krümel, Pellet, Granulat, Draht, Filament und Kombinationen davon vorliegt.

14. Verfahren nach einem der Ansprüche 1 bis 6, wobei das verwendete Stützmaterial eine polymere Zusammensetzung nach einem der Ansprüche 7 bis 13 umfasst oder daraus besteht.

15. Verwendung einer polymere Zusammensetzung nach einem der Ansprüche 7 bis 13, in einem Verfahren zur additiven Herstellung eines dreidimensionalen Objektes, wobei die polymere Zusammensetzung als Stützmaterial verwendet wird.
